(19) **Europäisches Patentamt / European Patent Office / Office européen des brevets**

(11) **EP 2 299 287 B1**

(12) **FASCICULE DE BREVET EUROPEEN**

(45) Date de publication et mention
de la délivrance du brevet:
**09.05.2012 Bulletin 2012/19**

(51) Int Cl.:
**G01S 19/20** (2010.01)

(21) Numéro de dépôt: **10176028.8**

(22) Date de dépôt: **09.09.2010**

(54) **Système hybride et dispositif de calcul d'une position et de surveillance de son intégrité**

Hybrides System und Vorrichtung zur Berechnung der Position und zur Überwachung der Integrität

Hybrid system and apparatus for calculating the position and monitoring the integrity

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **10.09.2009 FR 0904328**

(43) Date de publication de la demande:
**23.03.2011 Bulletin 2011/12**

(73) Titulaire: **Thales**
**92200 Neuilly Sur Seine (FR)**

(72) Inventeur: **Coatantiec, Jacques**
**26120 Fauconnières (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2008/040658     US-A- 5 702 070
US-B1- 6 570 531**

**Description**

L'invention est relative à la détermination d'une mesure de position d'un aéronef et à la surveillance de l'intégrité de cette mesure. Cette invention concerne principalement le domaine de la navigation aérienne civile et plus particulièrement les opérations d'approches en zone montagneuses ou imposant le strict respect d'un couloir étroit, lorsque les conditions de visibilité sont mauvaises. L'invention répond également aux besoins de la navigation militaire en très basse altitude parfois appelée vol dans le terrain. Pour ce type de trajets, les performances du système de navigation doivent vérifier un niveau d'exigence compatible avec les besoins des approches de non-précision communément désigné par l'acronyme RNP (de l'expression anglo-saxonne "Required Navigation Precision"). Le niveau d'exigence varie selon la phase du vol ou la mission fixée. Le niveau d'exigence consiste à répondre à des critères de précision, d'intégrité, de continuité et de disponibilité. L'exigence d'intégrité traduit la capacité du système de navigation à lever une alerte dans un délai défini lorsque le système est affecté d'une panne ou d'un défaut conduisant à un risque d'erreur sur la mesure de positionnement, supérieur à un certain seuil.

Pour quantifier l'intégrité d'une mesure de position, on utilise un paramètre appelé rayon de protection. Le rayon de protection correspond à une erreur de position maximale pour un taux de confiance (ou de risque) donné. C'est-à-dire que la probabilité que l'erreur de position dépasse le rayon de protection annoncé sans qu'une alarme soit envoyée à un système de navigation, est inférieure à cette valeur de probabilité donnée. La valeur de probabilité donnée est communément appelée le niveau de non-intégrité ou taux de risque. Il s'exprime en risque par heure que l'erreur de position excède le rayon de protection calculé sans qu'une alarme soit levée. Pour les opérations de type RNP en phase d'approche, le niveau de non-intégrité généralement requis va de $10^{-7}$ à $10^{-9}$ occurrences d'une erreur de position, supérieure au rayon de protection, par heure selon le type de panne envisagé.

Un récepteur de positionnement par satellites communément appelé système GNSS en référence à l'anglo-saxon "Global Navigation Satellite System") fournit des informations de position et de vitesse du porteur par triangulation à partir des signaux émis par des satellites défilants visibles du porteur. Pour des applications civiles ou militaires non classifiées le récepteur GNSS fournit également les mesures brutes de pseudo-distances et de doppler correspondant à chaque satellite poursuivi. Dans certaines application civiles le récepteur de positionnement par satellite est inclus dans un système plus global appelé récepteur de radiofréquence multi-canaux MMR (en référence à l'anglo-saxon " Multi-Mode receiver") comprenant notamment un récepteur ILS dédié aux phases d'atterrissage. Par récepteur de positionnement par satellites, on entend donc toutes les parties du récepteur de radiofréquence multi-canaux MMR intervenant dans la réception des mesures brutes.

Les informations de positionnement géographique fournies par le récepteur GNSS peuvent être momentanément indisponibles car le récepteur doit avoir en vue directe un minimum de quatre satellites du système de positionnement pour pouvoir faire un point. En outre, les données satellites peuvent être erronées par suite de pannes affectant les satellites. Ces données non intègres doivent alors être repérées pour ne pas fausser la position issue du récepteur GNSS ou d'une position hybride INS/GNSS (décrite par la suite) qui utiliserait ces mesures brutes. Pour prévenir les pannes satellites et assurer l'intégrité des mesures GNSS, il est connu d'équiper un récepteur de positionnement par satellites d'un système d'estimation de précision et de disponibilité dit RAIM (de l'anglo-saxon "Receiver Autonomous Integrity Monitoring") qui se base sur la géométrie et la redondance de la constellation de satellites pour exclure le satellite en panne.

Plus récemment sont apparus des systèmes hybrides combinant mathématiquement les mesures inertielles fournies par une unité de mesure inertielle UMI et les mesures fournies par le récepteur de positionnement par satellites GNSS. Ces systèmes hybrides sont connus dans l'état de la technique sous le nom de système INS/GNSS (de l'anglo-saxon "Inertial Navigation System" et "Global Navigation Satellite System"). On définit une centrale inertielle qui est un dispositif incluant une unité de mesure inertielle UMI et des moyens de calcul associés (permettant en particulier la réalisation des calculs de navigation inertie pure et d'hybridation inertie/GPS.) Une centrale inertielle est aussi appelée unité de référence inertielle IRU (de l'anglo-saxon "Inertial Reference Unit"). Une centrale inertielle incluant en outre un calculateur ou une partition d'un calculateur destiné à calculer des paramètres de vol par rapport à l'air (vitesse air, incidence, dérapage altitude etc.) et connecté à des sondes situées sur la peau de l'avion qui mesurent la pression totale, la pression statique, la température etc... est appelée centrale inertielle et aérodynamique de référence ADIRU en référence à l'expression anglo-saxonne "Air Data Inertial Reference Unit" .

Les calculs de navigation inertie pure, basés sur l'utilisation des mesures de l'UMI (gyromètres et accéléromètres) fournissent des informations de position précises à court terme mais dérivant sur le long terme (sous l'influence des défauts des capteurs). En contre partie les mesures fournies par un récepteur GNSS sont moins précises à court terme mais ne dérive pas dans le temps. Ainsi la précision des erreurs fournies par le récepteur GNSS permet de maitriser la dérive inertielle et les mesures inertielles peu bruitées permettent de filtrer le bruit sur les mesures du récepteur GNSS. La combinaison des deux types de mesure est réalisée par un filtre de Kalman.

Le filtrage de Kalman s'appuie d'une part sur les possibilités de modélisation de l'évolution de l'état d'un système physique considéré dans son environnement, au moyen d'une équation dite d'évolution (estimation à priori), et de modélisation de la relation de dépendance existant entre les états du système physique considéré. D'autre part, on modélise les mesures par lesquelles le système physique est perçu de l'extérieur, au moyen d'une équation dite d'observation pour permettre le recalage des états du filtre (estimation à postériori), autrement dit pour permettre le recalage du filtre de Kalman. Dans un filtre de Kalman, la mesure effective ou "vecteur de mesure" permet de réaliser une estimée à postériori de l'état du système qui est optimale dans le sens où elle minimise la covariance de l'erreur faite sur cette estimation. La partie estimateur du filtre génère des estimées a priori du vecteur d'état du système en utilisant l'écart constaté entre le vecteur de mesure effectif et sa prédiction a priori pour engendrer un terme correctif, appelé innovation.

Un exemple de procédé de détermination de positions et de surveillance de leur intégrité est décrit dans la demande de brevet WO2008040658 déposée par la demanderesse. Dans ce procédé, l'hybridation est réalisée par un filtre de Kalman. Le filtre de Kalman reçoit les points de position et de vitesse fournis par l'unité de mesure inertielle et les mesures de positionnement (pseudo-distance et pseudo-vitesse) fournies par l'unité de positionnement par satellites (on parle d'hybridation serrée ou en axes de satellites), modélise l'évolution des erreurs de la centrale inertielle et délivre l'estimée a postériori de ces erreurs. Ce procédé est dit à boucle fermée car l'estimée a postériori des erreurs sert à recaler le point de positionnement et de vitesse de la centrale inertielle. Le procédé pourrait également être réalisé en boucle ouverte, l'estimée a postériori des erreurs inertielles serait alors sous-optimale par rapport au processus en boucle fermée, parce que l'estimation d'une partie de ces variables ne correspondrait plus parfaitement à l'hypothèse de linéarité.

Dans le document WO2008040658 un procédé de surveillance de l'intégrité de la mesure de position calcule en permanence un rayon de protection associé à la mesure de position du mobile. L'évaluation de la valeur du rayon de protection résulte en général, comme décrit dans le document WO2008040658 de calculs de probabilités utilisant les caractéristiques statistiques de précision des mesures GNSS et du comportement des senseurs inertiels. Le calcul se fonde sur deux types d'erreur qui sont d'une part les erreurs normales de mesure et d'autre part les erreurs causées par une anomalie de fonctionnement de la constellation de satellites. Par ailleurs, ils tiennent compte de l'éventualité d'une panne satellite non détectée.

Toutefois les dispositifs de positionnement et de surveillance de l'intégrité de la mesure de position se basant sur les procédés d'hybridation ou sur les systèmes d'estimation de précision et de disponibilité dit RAIM ne garantissent pas les mesures de position en cas de pannes matérielles des récepteurs de positionnement embarqués à bord de l'avion non-détectées (par les équipements eux-mêmes), à savoir les récepteurs GNSS ou les centrales inertielles. En d'autres termes, la valeur du rayon de protection ne prend pas en compte l'éventualité et encore moins la présence d'une panne matérielle affectant un des récepteurs de positionnement. Une panne matérielle non détectée par les tests intégrés (ou "Built-In Test" en anglais) internes aux récepteurs et aux centrales inertielles est alors susceptible de générer une erreur, sur la position calculée, supérieure au rayon de protection évoqué précédemment (qui ne tient compte que des pannes satellites) sans qu'une alarme soit levée. Malheureusement le taux d'occurrence d'une panne matérielle non détectée dans le matériel embarqué est souvent supérieur au niveau d'intégrité requis pour les phases d'approche de non précision. Il est donc nécessaire de protéger la position calculée de leur effet.

Le but de l'invention est de proposer un système hybride capable de mesure de position et de surveillance de son intégrité palliant les inconvénients précités.

A cet effet l'invention a pour objet un système hybride INS/GNSS comportant un système hybride élémentaire comportant un module primaire de délivrance de mesures brutes élémentaires primaires $MB_{i1}$ comprenant chacune des mesures de positionnement et de bruit affectant lesdites mesures de positionnement, un module élémentaire de délivrance de mesures inertielles MI comprenant incréments d'angles et de vitesse, une unité d'hybridation recevant les mesures inertielles MI et lorsqu'elles sont disponibles les mesures brutes primaires $MB_{i1}$, et produisant une première solution hybride élémentaire PPVI1 comportant des mesures de position et des paramètres d'erreurs du module élémentaire ainsi qu'une matrice de variance/covariance primaire MHYP1, ledit système hybride comprenant en outre :

- un module secondaire de délivrance de mesures brutes élémentaires secondaires $MB_{j2}$,
- un premier filtre de Kalman étendu KE1 recevant la première solution hybride élémentaire PPVI1, la matrice de variance/covariance primaire MHYP1, les corrections hybrides HYC et, lorsqu'elles sont disponibles, les mesures brutes élémentaires primaires $MB_{i1}$ et secondaires $MB_{j2}$ issues de satellites communs au module primaire et au module secondaire, ledit filtre étendu KE1 ayant un premier vecteur d'état étendu VEE1 comprenant une partie dite d'écart hybride $\Delta X$, représentant l'écart entre la première solution hybride élémentaire PPVI1 et une deuxième solution hybride élémentaire PPV12 associée aux mesures inertielles MI et, lorsqu'elles sont disponibles, aux mesures brutes élémentaires secondaires $MB_{j2}$, ledit premier vecteur d'état étendu VEE1 comprenant en outre une partie erreur du système hybride élémentaire X1 affectant la première solution hybride élémentaire PPVI1, ledit filtre de Kalman étendu délivrant une première matrice de variance/covariance étendue MHYPE1 de l'erreur d'une première estimation EVEE1 du premier vecteur d'état VEE1,

- un module de calcul étendu CALC recevant la première matrice de variance/covariance étendue MHYPE1, ledit module de calcul étendu CALC déterminant un premier rayon de protection du système hybride RHG1, associé à une grandeur de position G, à partir de la première matrice de variance/covariance étendue MHYPE1 en fonction d'une première probabilité de fausse alarme prédéterminée PFA1, d'un niveau de non-intégrité PNI prédéterminé et d'une première probabilité prédéterminée PP1 d'apparition d'une panne matérielle non détectée d'un récepteur de positionnement par satellites.

Avantageusement le premier rayon de protection du système hybride RHG1 associé à une grandeur de position G est calculé à partir d'un premier seuil de détection SEΔG1 associé à l'écart hybride ΔX relatif à la grandeur G, ledit premier seuil étant obtenu à partir d'une partie de la première matrice de variance/covariance étendue MHYPE1 associée à l'écart hybride ΔX relatif à ladite grandeur de position G, pour la première probabilité de fausse alarme prédéterminée PFA1, ledit premier rayon de protection du système hybride RHG1 dépendant en outre d'une partie de la première matrice de variance/covariance étendue MHYPE associée à la partie erreur du système hybride élémentaire X1 relative à la grandeur de position G pour un premier taux de risque PND1 choisi de sorte à être inférieur ou égal au rapport entre le niveau de non-intégrité PNI et la probabilité PP1 d'apparition d'une panne matérielle non détectée d'un récepteur de positionnement par satellites.

Avantageusement, le module primaire, respectivement le module secondaire, est une unité de modélisation de mesures brutes primaires, respectivement mesures brutes secondaires, délivrées par un récepteur de positionnement par satellites primaire, respectivement secondaire, opérant à partir de constellations de satellites visibles poursuivis ; le module élémentaire de délivrance de mesures inertielles MI est une unité de modélisation de mesures inertielles délivrées par une centrale inertielle.

Avantageusement, le module primaire, respectivement le module secondaire est un récepteur de positionnement par satellites primaire GNSS1, respectivement secondaire GNSS2, opérant à partir de constellations de satellites visibles poursuivis; le module élémentaire de délivrance de mesures inertielles MI est une centrale inertielle CI.

Avantageusement, le premier filtre de Kalman étendu KE1 reçoit en outre une correction hybride HYC et produit une première estimation EVEE1 du premier vecteur d'état étendu VEE1, ledit module de calcul étendu CALC effectuant un premier test de détection d'une panne matérielle, affectant un des récepteurs de positionnements par satellites pris parmi le récepteur primaire et le récepteur secondaire, en comparant les composantes de la première estimation EVEE1, relatives à l'écart hybride ΔX obtenu pour une grandeur de position G, avec ledit premier seuil de détection SEΔG1 associé à l'écart hybride ΔX relatif à la grandeur G, lorsqu'au moins une des composantes de la première estimation EVEE1, du premier vecteur d'état étendu VEE1 relatives à l'écart ΔX obtenu pour une grandeur de position G, est supérieure au premier seuil de détection SEΔG1, le module de calcul étendu CALC déclenche une alarme sur la présence défaillance d'au moins un récepteur de positionnement par satellite.

Avantageusement, lorsqu'aucune des composantes de la première estimation EVEE1 du premier vecteur d'état étendu VEE1 relatives à l'écart ΔX obtenu pour la grandeur de position G n'est supérieure au premier seuil de détection SEΔG1, le niveau de non-intégrité PNI est égal à un niveau de non-intégrité normal PNIN. Avantageusement lorsqu'une alarme est déclenchée, l'alimentation de l'unité d'hybridation et du filtre de Kalman étendu KE1 au moyen des mesures brutes primaires et secondaires est arrêtée et ledit niveau de non-intégrité PNI est égal à un niveau de non-intégrité de survie PNIS supérieur ou égal au niveau de non-intégrité normal PNIN.

Avantageusement, le système hybride comprend en outre :

- un récepteur de positionnement par satellite tertiaire GNSS3, produisant des mesures brutes tertiaires MB$_{m3}$,
- un deuxième KE2 filtre de Kalman étendu recevant les mêmes données que le premier filtre étendu KE1 à l'exception des mesures brutes MB$_{j2}$ secondaires qui sont remplacées par les mesures brutes tertiaires MB$_{m3}$, et produisant une deuxième estimation EVEE2 d'un deuxième vecteur d'état étendu VEE2, et une deuxième matrice de variance/covariance étendue MHYPE2 associée,
- un troisième KE3 (filtre étendu recevant les mêmes données que le premier filtre étendu KE1 à l'exception des mesures brutes MB$_{i1}$ primaires qui sont remplacées par les mesures tertiaires MB$_{m3}$ et produisant une troisième estimation EVEE3 d'un troisième vecteur d'état étendu VEE3, et une troisième matrice de variance/covariance étendue MHYPE3, associée, ledit calculateur étendu CALC calculant en outre un deuxième et un troisième rayon de protection du système hybride RHG2, RHG3 relatifs à une grandeur de position G, à partir de la deuxième MHYPE2 et respectivement la troisième MHYPE3 matrices de variance/covariance étendues et effectue également un deuxième et un troisième tests consistant à comparer les composantes de la deuxième EVEE2 et la troisième EVEE3 estimation, relatives à l'écart obtenu pour la grandeur G, avec respectivement le deuxième SEΔG2 et le troisième SEΔG3 seuils, les résultats TE1, TE2, TE3 des premier, deuxième et troisième tests étant positifs lorsque lesdites composantes de la première EVEE1, respectivement la deuxième EVEE2, respectivement la troisième EVEE3 sont respectivement supérieures aux premier SE$\Delta$G1, deuxième SE$\Delta$G2 et troisième SE$\Delta$G3 seuils, et lorsqu'au moins un des résultats TE1, TE2, TE3, respectifs des premier, deuxième et troisième tests est positif, une alarme est levée, ledit calculateur étendu CALC, identifiant en outre le récepteur défaillant, parmi les trois récepteurs, à partir des résultats TE1, TE2, TE3 et excluant éventuellement le récepteur défaillant.

Avantageusement, la centrale inertielle est une centrale inertielle et aérodynamique de référence. Avantageusement le(s) récepteur(s) de positionnement par satellite(s) est (ou sont) compris dans un (ou des) récepteur(s) de radiofréquence multi-canaux MMR.

L'invention a également pour objet, un dispositif comprenant un nombre M supérieur à 1, de système hybrides $Si_k$, fournissant chacun un rayon de protection élémentaire $REG_k$ associé une grandeur de position G, un rayon de protection hybride $RHG_k$ associés à ladite grandeur de position G ainsi qu'une matrice de variance/ covariance de la solution élémentaire $MHYP1_k$ associée à l'erreur faite sur une première solution hybride élémentaire $PPVI1_k$, ledit dispositif comprenant en outre un module de consolidation CONS déterminant une solution hybride globale SGLOB, ledit module de consolidation CONS déterminant un rayon de protection inertiel RUMIG, qui est la valeur la plus faible prise parmi des rayons de protection inertiels individuels $RUMIG_k$ calculés pour chaque centrale inertielle $CI_k$ dont la première solution hybride élémentaire $PPVI1_k$ est différente de la solution globale SGLOB, chaque rayon de protection inertiel individuel $RUMIG_k$ dépendant de :

- la statistique $SG_k$ de l'écart entre la solution globale et la première solution élémentaire $PPVI1_k$, pour la grandeur,
- la première matrice de variance/covariance de la solution élémentaire $MHYP1_k$,
- un deuxième taux de fausse alarme PFA2 acceptable et d'un deuxième taux de risque PND2 choisi de sorte à être inférieur ou égal au rapport entre le niveau de non-intégrité PNI et une probabilité déterminée PP2 d'apparition d'une panne d'une centrale inertielle.

Avantageusement, la statistique $SG_k$ de l'écart entre la solution globale et la première solution élémentaire $PPVI1_k$, pour la grandeur G est égale à la somme des erreurs des matrices de variance-covariance de chacune des premières solutions hybrides élémentaires. Avantageusement, le module de consolidation CONS déterminant en outre un rayon de protection global RGLOBG associé à une des grandeurs de position G composant la solution hybride globale SGLOB, ledit rayon de protection RGLOBG étant la valeur la plus élevée prise parmi les rayons de protection élémentaires $REG_k$, les rayons de protection hybrides $RHG_k$, le rayon de protection inertiel RUMIG.

Un système hybride et un dispositif selon l'invention permettent de protéger en permanence leurs mesures de position respectives des éventuelles pannes matérielles affectant un récepteur de positionnement par satellites et éventuellement une unité de mesure inertielle. Ils permettent en outre de détecter une panne d'un récepteur de positionnement par satellites.

Le système hybride et le dispositif selon l'invention sont capables de prédire les performances de l'aéronef en termes de rayon de protection sur une trajectoire prédéterminée. Le dispositif selon l'invention ne nécessite pas de faire une quelconque hypothèse sur la nature des pannes matérielles affectant le matériel utilisé.

Le système hybride selon l'invention se base uniquement sur la statistique de l'écart entre une première solution hybride élémentaire et une deuxième solution hybride élémentaire pour surveiller l'intégrité de la première solution hybride élémentaire. L'architecture proposée ne nécessite pas, pour réaliser cette surveillance, de dupliquer l'unité d'hybridation élémentaire pour calculer la deuxième solution hybride.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement un premier exemple de système hybride selon l'invention,
- la figure 2 représente un exemple de comportement, en fonction du temps, d'un rayon de protection associé à la composante horizontale de la position de l'aéronef ainsi que l'erreur sur ladite composante horizontale dans la première solution hybride élémentaire,
- la figure 3 représente un deuxième exemple de système hybride selon l'invention,
- la figure 4 représente un exemple de dispositif selon l'invention.

D'une figure à l'autre, les mêmes éléments sont repérés par les mêmes références.

L'invention concerne un système hybride comprenant une unité d'hybridation INS/GNSS délivrant une solution hybride élémentaire PPVI comportant des mesures de position hybrides élémentaires G (position horizontale c'est-à-dire latitude et longitude, altitude, vitesse, cap..etc). L'unité d'hybridation délivre également au moins un rayon de protection que l'on appellera pour plus de clarté, rayon de protection hybride, associé à une mesure de position hybride élémentaire, pour un niveau de non-intégrité donné PNI. Ce rayon de protection protège la mesure de position hybride vis-à-vis des effets des pannes satellites non détectées. Le document WO2008040658 donne une description d'un exemple de manière de calculer ce rayon de protection hybride.

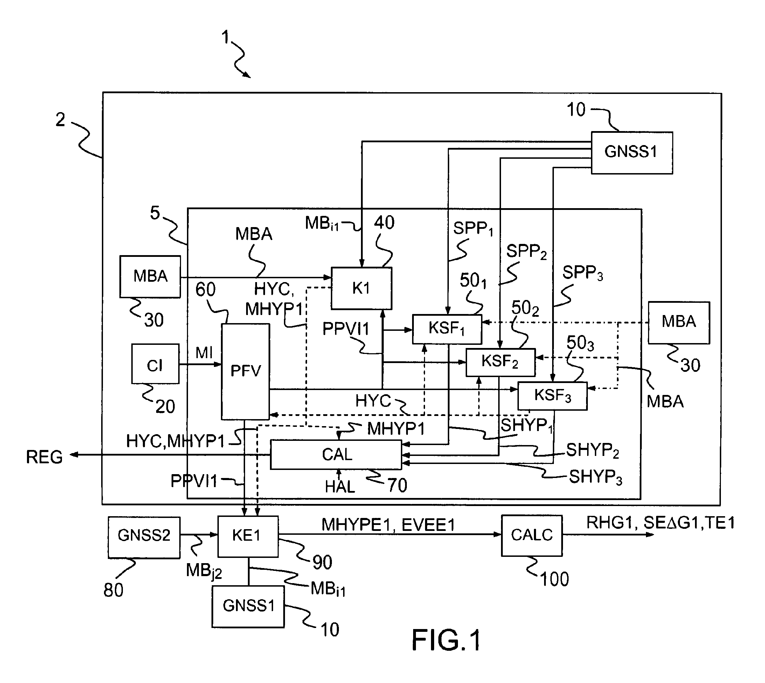

Sur la figure 1, on a représenté un premier exemple de système hybride 1 d'un dispositif selon l'invention tel qu'il fonctionne en vol.

Le système hybride 1 selon l'invention comprend un système hybride élémentaire 2 comportant,

- un module élémentaire 20 de délivrance de mesure inertielles MI qui est dans l'exemple représenté, une centrale inertielle CI, 20, comprenant une unité de mesure inertielle UMI non représentée,
- un module primaire 10 de délivrance de mesures brutes élémentaires primaires $MB_{i1}$ des signaux émis par des satellites, i désignant un indice de satellite et étant compris entre 1 et N, le module étant, dans l'exemple représenté sur la figure 1, un récepteur de positionnement par satellites primaire GNSS1, 10, opérant à partir d'une constellation de N satellites visibles poursuivis ;
- une unité d'hybridation 5 produisant une première solution hybride élémentaire PPVI1 comportant des premières mesures de positionnement (premières mesures de position et de vitesse) et des paramètres d'erreur du module élémentaire 20, obtenue en hybridant les mesures inertielles MI et les mesures brutes élémentaires primaires lorsqu'elles sont disponibles.

L'unité de mesure inertielle, UMI comporte des capteurs comportant des gyromètres et des accéléromètres non représentés. Les mesures inertielles comprennent des incréments d'angles et de vitesse. Les mesures brutes primaires provenant du récepteur GNSS comprennent des mesures de positionnement dont des pseudo-distances et pseudo-vitesses brutes ainsi que le bruit affectant les mesures de positionnement et les éphémérides des satellites poursuivis.

Dans l'exemple représenté sur la figure 1, l'unité d'hybridation 5 comprend :

- une plate-forme virtuelle PFV, 60 recevant les mesures inertielles MI et produisant une première solution hybride élémentaire PPVI1,
- un filtre de Kalman d'hybridation, K1, 40.

Le filtre Kalman d'hybridation K1, reçoit des premières mesures brutes $MB_{i1}$. Le filtre de Kalman d'hybridation K1 reçoit en outre la première solution hybride élémentaire PPVI1. Le filtre Kalman d'hybridation K1 cherche à estimer les erreurs réalisées sur la solution inertielle, il produit :

- une correction hybride HYC comportant un vecteur d'état VE correspondant aux erreurs du système hybride élémentaire, obtenu en observant l'écart entre les mesures de position hybrides élémentaires comprises dans la première solution hybride élémentaire PPVI1 et les mesures brutes $MB_{i1}$ primaires;

- une matrice de variance/covariance primaire MHYP1 de l'erreur faite sur l'estimation du vecteur d'état VE.

La correction hybride HYC est délivrée d'une part à la plateforme virtuelle (on dit que les mesures inertielles et les mesures brutes sont hybridées) et d'autre part aux filtres secondaires (qui seront décrits plus bas) de sorte que la valeur des composantes des vecteurs d'état VE et VEi (qui seront décrits ci-après) sont proches de zéro. On dit que le système hybride élémentaire selon l'invention est un système à boucle fermée. En variante, le système hybride élémentaire est à boucle ouverte.

En résumé, le filtre de Kalman d'hybridation a un vecteur d'état correspondant aux erreurs du système hybride élémentaire, en particulier les erreurs de biais et de dérive résiduelles de la centrale inertielle. Il observe les écarts entre les mesures de position fournies par la centrale inertielle et par le récepteur GNSS1. Il a une matrice d'évolution F modélisant l'évolution des erreurs du système hybride élémentaire, une matrice d'observation H modélisant les relations entre le vecteur d'états et les écarts observés entre les mesures de positions délivrées par la centrale inertielle et les mesures fournies par le récepteur GNSS, et un gain K qui sert à recaler la centrale inertielle. Le gain K est calculé de telle sorte qu'il minimise la covariance de l'erreur VE a posteriori faite sur la solution hybride. Le gain K se calcule selon un procédé connu à partir de la matrice de variance/covariance associée au vecteur d'état et de la précision des mesures.

L'unité d'hybridation comprend en outre un banc de N filtres de Kalman secondaires $KSF_i$, $50_i$. Le filtre de Kalman secondaire $KSF_i$ reçoit les mesures brutes élémentaires de N-1 signaux. Les N-1 signaux sont produits par les satellites poursuivis sauf le satellite d'indice i. Cet ensemble de mesures brutes de N-1 signaux est noté $SPP_i$. Le filtre d'hybridation K1 et les filtres secondaires $KSF_i$ reçoivent les points de positionnement et de vitesse inertiels de la première solution hybride élémentaire PPVI1. Les filtres secondaires $KSF_i$ produisent des paramètres hybrides $SHYP_i$ qui comportent :

- une estimation d'un vecteur d'état, $EVE_i$ correspondant aux erreurs du système hybride observant des écarts entre les points de positionnement et de vitesse inertiels issus de la première solution hybride élémentaire PPVI1 et l'ensemble de mesures brutes $SPP_i$ et,
- une matrice de variance/covariance secondaire $P_i$ de l'erreur faite sur l'estimation du vecteur d'état $EVE_i$.

L'unité d'hybridation comprend module de calcul CAL, 70 recevant les paramètres hybrides $SHYP_i$ et la matrice de variance/covariance primaire MHYP1 et détermine une valeur de rayon de protection élémentaire REG associé à une grandeur de position G (par exemple la position horizontale). La détermination du rayon de protection protégeant la position hybride vis à vis de l'effet des éventuelles pannes satellites, pour un niveau de non-intégrité donné PNI, est décrite dans le document WO2008040658.

Le système hybride élémentaire représenté sur la figure 1 présente un module barométrique 30 délivrant des mesures barométriques MBA qui sont envoyées au filtre de Kalman d'hybridation K1 et aux filtres d'hybridation secondaires. En effet, dans ce mode de réalisation la centrale inertielle est une ADIRU. En variante, la centrale inertielle est une IRU.

Le système hybride selon l'invention comprend :

- un premier module secondaire 80 de génération de L mesures brutes élémentaires secondaires $MB_{j2}$ émises par des satellites,j étant un indice désignant un satellite et étant compris entre 1 et L. Dans le mode de réalisation représenté sur la figure 1, le module secondaire est un récepteur de positionnement par satellites secondaire GNSS2, 80, opérant à partir d'une constellation de L satellites visibles poursuivis,

- un filtre de Kalman KE1, 90, que l'on appellera premier filtre de Kalman étendu, recevant la première solution hybride élémentaire PPVI1, la matrice de variance/covariance primaire MHYP1 et les corrections hybrides HYC et lorsqu'elles sont disponibles les mesures brutes primaires $MB_{i1}$ et secondaires $MB_{j2}$ provenant des satellites communs aux récepteurs primaire et secondaire et les corrections hybrides HYC. Dans une architecture en boucle ouverte la correction HYC est nulle.

Les modules primaire et secondaire délivrent des mesures brutes élémentaires primaires MBi1, respectivement secondaires MBj2, de signaux émis par des satellites, où i désigne un indice de satellite compris entre 1 et N et où j désigne un indice de satellite compris entre 1 et L.

Le filtre étendu KE1 possède un premier vecteur d'état étendu VEE1 comprenant :

- les erreurs X1 du système hybride élémentaire représentant les erreurs des différentes composantes de la première solution élémentaire PPVI1 et étant estimées au moyen d'un modèle d'erreur classique représentant les erreurs d'une centrale inertielle,

- les erreurs X2 communes aux mesures des récepteurs GNSS embarqués dans l'aéronef, comprenant des composantes les erreurs ionosphériques, les erreurs troposphériques, les erreurs d'éphémérides,

- les erreurs HI1 et HL2 affectant les horloges du récepteur primaire GNSS1 et respectivement du récepteur secondaire GNSS2 (biais, dérive, accélération des horloges, sensibilité à l'accélération),

- l'écart ΔX représentant l'écart entre la première solution hybride élémentaire PPVI1 et une deuxième solution hybride élémentaire PPVI2 (comprenant des deuxièmes mesures de positionnement et des paramètres d'erreur de la centrale inertielle) associées aux mesures inertielles MI et aux mesures brutes secondaires issues de satellites communs aux récepteurs primaire et secondaire, c'est-à-dire obtenue en hybridant, au moyen de la première unité d'hybridation 5, les mesures inertielles MI et les mesures brutes secondaires.

Les mesures du récepteur primaire et du récepteur secondaire sont affectées d'erreurs communes et d'erreur indépendantes provenant uniquement au récepteur (horloge récepteur, bruit thermique). Sur les signaux actuels, les erreurs communes sont largement prédominantes. Si l'on excepte l'erreur d'horloge du récepteur qui est aisément identifiable et si, pour calculer la solution hybride, on utilise à chaque recalage du filtre de Kalman primaire, un ensemble de satellites communs au récepteur primaire et au récepteur secondaire, l'écart entre la première solution hybride élémentaire PPVI1 et la deuxième solution hybride élémentaire PPVI2 n'est alors du qu'à la partie d'erreur induite par les récepteurs. Comme ces erreurs sont faibles (bruits) l'écart doit rester faible car sinon il est représentatif d'une erreur.

Le filtre étendu KE1 délivre :

- une première estimation EVEE1 du premier vecteur d'état étendu VEE1, le premier vecteur d'état étendu est estimé par le filtre KE1 en utilisant successivement les mesures primaires $MB_{i1}$ et secondaires $MB_{j2}$ qui proviennent des satellites communs aux récepteurs primaire et secondaire,

- une première matrice de variance/covariance MHYPE1, appelée matrice de variance/covariance étendue, représentant la statistique d'erreur relative à l'estimation du vecteur d'état étendu EVEE1.

Le système hybride comprend en outre un module de calcul CALC,100, appelé module de calcul étendu, recevant la première matrice de variance/covariance étendue MHYPE1 et l'estimation du premier vecteur d'état étendu VEE1.

L'estimation de l'écart ΔX est obtenue en soustrayant deux modèles d'évolution identiques pour deux vecteurs d'état différents dont X1 représentant les erreurs du système hybride élémentaire et un deuxième vecteur d'état X1' représentant les erreurs d'un deuxième système hybride élémentaire hybridant les mesures inertielles et les mesures brutes secondaires $MB_{j2}$ issues de satellites communs aux récepteurs primaire et secondaire. On aurait pu remplacer la partie ΔX par un vecteur X1' identique à X1 mais il est plus astucieux de raisonner sur X1-X1' dont l'évolution est la même que celle de X1 au bruit de modèle près puisqu'il est identique sur X1 et X1'. Lorsque l'on fait la différence le bruit disparaît, d'où les équations d'évolution données ci-après. De cette façon le filtre estime directement la grandeur qui nous intéresse et la loi statistique à laquelle il obéit

La première matrice d'observation étendue relative aux mesures brutes issues du premier récepteur GNSS1 s'exprime uniquement en fonction de la partie X1.

Les équations d'évolution de la partie X1 et de la partie ΔX dépendent de la même matrice d'évolution F, ces équations sont les suivantes :

$$d(X1)/_{dt} = F.X1 + w \text{ ,}$$

$$d(\Delta X)/_{dt} = F.\Delta X$$

où w représente le bruit de modèle qui tient compte des approximations de modélisation des erreurs inertielles et F la matrice d'évolution du filtre de Kalman secondaire.

Les états du premier vecteur d'état étendu du filtre de Kalman KE1 (qui représente des erreurs) sont par nature inconnus et sont donc initialisées à 0. La matrice de variance/covariance étendue MHYPE est initialisée à partir du domaine d'incertitude possible pour les différentes erreurs (c'est-à-dire les différents états du filtre).Le filtre étendu KE1 applique les corrections hybrides HYC à son vecteur d'état car le système qu'il modélise prend en compte les corrections hybrides HYC (qui viennent en effet corriger les solutions hybrides élémentaires.)

Les mesures brutes primaires sont utilisées pour recaler la partie erreurs du système hybride élémentaire X1, les erreurs communes X2, les erreurs d'horloge HI1 affectant le récepteur primaire GNSS1. Les mesures brutes secondaires sont utilisées pour recaler la partie erreurs du système hybride élémentaire X1 les erreurs communes X, les erreurs d'horloge HI2 affectant le récepteur secondaire GNSS2 et l'écart hybride étendu ΔX.

On va maintenant décrire un premier test de détection de pannes matérielles affectant un des récepteurs de positionnement par satellites pris parmi le récepteur primaire GNSS1 et le récepteur secondaire GNSS2, non-détectées en amont du filtre d'hybridation c'est-à-dire, soit par le contrôle interne au récepteur concerné soit par le calculateur CAL 70 qui effectue classiquement un test appelé test d'innovation consistant à comparer, pour chaque filtre de Kalman d'hybridation, la mesure d'une grandeur avec la valeur de cette grandeur prédite par ledit filtre de Kalman d'hybridation.

Le test de détections des pannes matérielles non détectées est réalisé par le calculateur étendu 100. Le système hybride selon l'invention se base sur le fait que la probabilité que des pannes matérielles non détectées affectent simultanément les récepteurs satellites du système hybride est négligeable vis à vis du taux de non-intégrité PNI recherché. Le filtre de Kalman étendu fournit, avec la première matrice de variance/covariance étendue MHYPE1, et plus particulièrement avec la partie de cette matrice relative à l'écart hybride étendu ΔX, une représentation gaussienne de la loi statistique à laquelle obéit l'écart entre les deux solutions hybrides (obtenues sur la base des deux récepteurs) dont l'une est exacte puisque l'on peut négliger le fait que des pannes matérielles simultanées affectent les deux récepteurs.

Avantageusement, on définit une première probabilité de fausse alarme acceptable PFA1, lors d'un test de détection des pannes matérielles affectant un récepteur de positionnement par satellites du système hybride. PFA1 représente la probabilité maximale qu'une alarme soit déclenchée alors qu'aucun récepteur GNSS est en panne de fausses alarmes (c'est-à-dire de fausses détections de pannes). Pour une première probabilité de fausses alarmes PFA1 donnée, le calculateur étendu CALC, 100, est apte à définir des premiers seuils de détection SEΔG1 associés chacun à l'écart hybride ΔX relatif à une grandeur G. Au-delà du premier seuil de détection SEΔG1, l'écart entre une première mesure hybride de la grandeur G, comprise dans la première solution hybride élémentaire PPVI1, et une deuxième mesure hybride de la grandeur G, issue de la deuxième solution hybride élémentaire PPVI2, est jugé hors statistique et représentatif d'une panne d'un récepteur de positionnement par satellites du système hybride. Le premier seuil de détection SEΔG1 dépend uniquement du premier taux de fausse alarme acceptable PFA1 et de la partie de la matrice de variance/covariance étendue associée à l'écart hybride étendu relatif à cette grandeur. Pour détecter une panne matérielle associée à un récepteur GNSS, le calculateur CALC,100, compare les composantes ΔGn de la première estimation EVEE1 du premier vecteur d'état étendu VEE1 associées à l'écart estimé pour la grandeur G, avec le seuil d'écart correspondant. On compare par exemple au premier seuil, les composantes relatives aux écarts en latitude et en longitude, lorsque la grandeur G est la position horizontale. Lorsqu'au moins une composante ΔGn est supérieure au premier seuil de détection SEΔG1 associé à la grandeur G une alarme est levée. On dit que le premier résultat TE1 du premier test est positif lorsqu'au moins une composante de la première estimation EVEE1 dépasse le premier seuil SEΔG1, sinon le test est négatif. En pratique, le principe du seuil de détection s'applique à chaque composante du premier vecteur d'état étendu VEE1 mais on s'intéresse avantageusement aux écarts entre les mesures de position. On peut calculer plus spécifiquement un seuil vertical pour l'écart entre la première et la deuxième altitude hybride élémentaire (issues respectivement de la première et de la deuxième solution hybride élémentaire) ou bien un seuil horizontal pour l'écart entre la latitude et la longitude hybrides élémentaires.

Comme expliqué précédemment le seuil SEx défini pour une variable donnée x tient compte de l'écart type $\sigma_x$ de l'estimation de la variable x. L'écart type se déduit de la matrice de variance/covariance associée à la variable. C'est la racine carrée de la variance/covariance de la variable c'est-à-dire la racine carrée du coefficient de la diagonale de la matrice de variance/covariance correspondant à la variable mesurée.

Le seuil de détection SEx pour une variable x est donné par la formule suivante :

$$SEx = n1^* \sigma_x$$

n1 est un seuil de probabilité dépendant du premier taux de fausse alarme PFA1.

Il est donné par la formule suivante sous l'hypothèse que le taux de fausse alarme suit une hypothèse gaussienne :

$$PFA1 = \frac{2}{\sqrt{2\pi}\,\sigma_x} * \int_T^\infty e^{\frac{-t^2}{2\sigma_x^2}}\,dt$$

où $T = n1^*\sigma_x$

Dans le système hybride selon l'invention, les variables auxquelles on s'intéresse sont des écarts hybrides associés à des grandeurs G des écarts de position. L'écart type se déduit de la première matrice étendue MHYPE1. Lorsque la variable est associée à une seule composante du vecteur d'état étendu VEE1, l'écart type est égal à la racine carré du coefficient de la diagonale de la matrice de variance/covariance étendue MHYPE1 correspondant à la variable x. C'est par exemple le cas lorsqu'on s'intéresse à l'écart entre les altitudes hybrides élémentaires. A l'inverse lorsqu'on s'intéresse à l'écart entre les positions horizontales hybrides, l'écart fait appel à deux composantes du vecteur d'état étendu: l'écart entres les latitudes $\Delta\theta x$ et l'écart entre les longitudes $\Delta\theta y$, présentant des écarts types respectifs $\sigma_{\Delta\theta x}$ et $\sigma_{\Delta\theta x}$. Il est nécessaire de calculer un écart type $\sigma_{\Delta H}$ relatif à l'écart entre les composantes horizontales des positions hybrides élémentaires issues de deux solutions hybrides. Plusieurs méthodes existent pour calculer le seuil SEx associé à une variable x présentant une pluralité de composantes j. On calcule, par exemple, un seuil en faisant l'hypothèse que les composantes de la variable considérée sont décorrélées. Il s'agit d'une hypothèse conservatrice qui conduit à la valeur maximale du seuil. L'écart type associé à la variable est égal à la somme quadratique des écarts types associés aux composantes j respectives de la variable. Par exemple, l'écart type $\sigma_{\Delta H}$ associé à l'écart entre les composantes horizontales des deux positions hybrides horizontales élémentaires est donné par la formule suivante :

$$\sigma_{\Delta H} = \sqrt{(\sigma_{\Delta\theta x}{}^2 + \sigma_{\Delta\theta y}{}^2)}$$

En variante, on tient compte de la corrélation entre les composantes de la variable. Le seuil acceptable est, par exemple, calculé à partir de l'évaluation d'une ellipse de confiance comme cela est décrit dans la demande de brevet WO2008040658. Cette méthode, expose comment on calcule un rayon de protection R (ici c'est le premier seuil SE$\Delta$G1) associé à l'écart d'une grandeur G présentant deux composantes par exemple $\Delta\theta x$ et $\Delta\theta y$ à partir d'une valeur de probabilité Pb donnée (ici c'est le premier taux de fausse alarme PFA1) et de la matrice de variance/covariance P liant ces deux composantes (matrice 2*2 extraite de la matrice de variance/ covariance étendue et relative aux 2 états d'écart de position horizontale , la dite matrice P comprenant des coefficients diagonaux $\sigma_{\Delta\theta y}$ et $\sigma_{\Delta\theta x}$ associés aux deux composantes et un coefficient de corrélation qui est le coefficient non diagonal p.

Pour surveiller l'intégrité d'une mesure de position G comprise dans la solution hybride individuelle, le calculateur étendu CALC, 100, calcule un premier rayon de protection du système hybride RHG1 associé à une grandeur mesurée G protégeant la mesure de position de la première solution hybride élémentaire vis-à-vis des pannes matérielles affectant éventuellement les récepteurs de positionnement par satellites du système hybride. Le premier rayon de protection du système hybride RHG1 est l'erreur maximale potentielle, affectant l'estimation de la grandeur de position G au moyen du système hybride élémentaire, pour un niveau de non-intégrité donné en tenant compte de l'éventualité d'une panne d'un des récepteurs de positionnement par satellites du système hybride. Le rayon de protection est calculé, à partir de la première matrice de variance/covariance étendue MHYPE1, pour un taux de non-intégrité PNI prédéfini, pour une première probabilité de fausse alarme acceptable PFA1 et pour premier taux de risque PND1 prédéfini. Le taux de non-intégrité PNI est la probabilité maximale, exprimée en nombre d'occurrences $10^{-x}$ par heure que l'erreur affectant une mesure hybride élémentaire d'une grandeur donnée dépasse le premier rayon de protection du système hybride RHG1 sans qu'une alarme soit envoyée (où x est un nombre entier). Plus précisément, le rayon de protection du système hybride est donné par la formule suivante : RHG1 = SE$\Delta$G1 +SEG1,

où SEG1 représente le rayon de protection associé au bruit (ou aux erreurs normales) affectant la partie de l'erreur hybride élémentaire X1 relative à la grandeur G. Le rayon de protection SEG1 associé au bruit est calculé pour un premier taux de risque PND1 choisi de sort à être inférieur ou égal au rapport entre le taux de non-intégrité PNI et une probabilité d'apparition d'une panne matérielle non-détectée PP1 d'un récepteur de positionnement par satellite Ainsi le risque que le bruit normal ( c'est à dire en l'absence de panne d'un récepteur de positionnement par satellites) entraîne une erreur de position supérieure à SEG1 est égal à PND1 qui est inférieur ou égal au rapport entre PNI et PP1. Par exemple, pour un taux d'intégrité PNI égal à $10^{-x}$ /h, avec x= 7, et un taux de pannes matérielles non-détectées d'un récepteur de positionnement par satellites PP1 égal à $10^{-4}$/h, on choisit une probabilité PND 1 de préférence inférieure à $10^{-3}$/h.

Le rayon de protection associé au bruit SEG1, affectant la mesure de position G issue de la première solution hybride élémentaire, est calculé au moyen d'une des méthodes utilisées pour le premier seuil SEΔG1 à partir de l'écart type $\sigma_{G1}$ de l'erreur de position hybride élémentaire relative à la grandeur G. L'écart type est obtenu à partir de la variance de la partie matrice de variance/covariance étendue qui est associée à l'erreur du système hybride élémentaire obtenue pour la grandeur G. Par exemple, le seuil ou rayon de protection lié au bruit est donné par la formule suivante : SEG1 = n2 * $\sigma_{G1}$, où n2 représente le coefficient qui permet de tenir le taux de non-intégrité PNI requis en tenant compte du premier taux de pannes matérielles non détectées PND1. n2 est donné par la formule suivante :

$$PND1 = \frac{2}{\sqrt{2\pi}\,\sigma_{G1}} * \int_{T'}^{\infty} e^{\frac{-\iota^2}{2\sigma_{G1}^2}} dt$$

T'est égal à n2 * $\sigma_{G1}$.

Pour l'exemple mentionné ci-dessus, où PND1 est inférieure à $10^{-3}$ pannes matérielles non détectées par heure, on peut choisir n2 = 3,3. Ainsi le rayon de protection protégeant la solution hybride vis à vis des éventuelles pannes matérielles des récepteurs de positionnement par satellite prend en compte l'effet du bruit autour de la solution intègre (première solution hybride élémentaire) qui sert de référence pour le calcul du rayon de protection. En effet, celle-ci, bien que non affectée par une panne du récepteur, n'est pas forcément rigoureusement exacte puisque qu'elle subit l'effet des erreurs normales affectant les mesures GNSS ou les capteurs inertiels.

Les calculs du premier seuil SEΔG1 et du premier rayon de protection du système hybride RHG1 ne dépendent que de la première matrice de variance /covariance étendue. Les calculs sont avantageusement réalisés de manière prédictive sur une trajectoire prédéterminée afin de prévoir les performances de l'aéronef sur cette trajectoire. Le calcul de prédiction est réalisé à partir d'une trajectoire prédéterminée, de caractéristiques statistiques de l'inertie (qui permettent de propager et recaler la matrice de variance/covariance des filtres de Kalman le long de la trajectoire) des performances garanties pour la constellation (on tient compte du pire cas de précision de mesure GPS par axe satellite) et du rapport signal à bruit minimal nécessaire pour accepter les mesures. Ce rapport signal à bruit minimum permet de calculer la part d'erreur normale ou bruit rajouté par le récepteur dans le calcul des pseudo-mesures.

Cette analyse est réalisée sur la base d'un module de délivrance de mesures inertielles et de modules primaires et secondaires de délivrance de mesures brutes qui correspondent respectivement à des unités de modélisation de mesures inertielles, de mesures brutes primaires, de mesures brutes secondaires. Les précisions des mesures brutes $MB_{i1}$ et $MB_{j2}$ et des mesures inertielles sont alors des valeurs prédéterminées en fonction de la trajectoire à suivre (pour les variables de positionnement) et en fonction des statistiques d'erreur des récepteurs de positionnement par satellite et des capteurs de l'unité de mesure inertielle (performances garanties par le département de la défense DoD de l'anglo-saxon "Department of Defence," dans le document GPS Standard, en anglais "Positioning Service Performance Standard".) Dans ce mode de réalisation on effectue les opérations de propagation et de recalage de la matrice de variance/covariance étendue le long de la trajectoire mais on ne propage pas et on ne recale pas les vecteurs d'état (hybrides et étendus) puisqu'on dispose de modèles des mesures inertielles et satellites mais pas de mesures réelles. On ne calcule donc ni les corrections hybrides HYC ni les estimations des vecteurs d'état VE et EVEE1. Il s'agit d'un procédé classique de simulation du comportement d'un filtre de Kalman à travers sa matrice de variance-covariance uniquement.

L'analyse de prédiction du rayon de protection garanti permet de prédire si l'aéronef présente les performances nécessaires pour suivre une mission prédéterminée. Par exemple, pour suivre une procédure RNP 0,1, l'aéronef doit être capable de déterminer sa position avec un rayon de protection inférieur ou égal à une valeur limite L égale à 0,175 Nautiques Nm, un nautique étant égal à 1852 m. Lorsque le premier rayon de protection RHG1 est supérieur à la limite L ou trop proche de cette valeur limite, on considère que l'aéronef ne présente pas les performances pour suivre cette procédure.

En variante, le calcul des rayons de protection est avantageusement réalisé en temps réel, pendant une mission suivie par l'aéronef. Dans cette variante, le module de délivrance de mesures inertielles et les modules primaire et secondaire de délivrance de mesures brutes sont respectivement, comme représenté sur la figure 1, une centrale inertielle CI, 20 et des récepteurs de positionnement par satellites primaire et secondaire. L'analyse en temps réel permet ainsi de tenir compte de la performance réelle des mesures observées (performances des récepteurs satellite et inertiels) qui sont souvent meilleures que les performances garanties par le DoD dans le document GPS Standard.

Dans ce mode de réalisation, l'estimation EVEE1 du premier vecteur d'état étendu VEE1 est réalisée sur la base d'un recalage des filtres de Kalman K1, KE1 à partir de mesures inertielles et brutes réelles. La partie écart $\Delta X$ du vecteur d'état étendu VEE1 est représentative de l'état de fonctionnement des deux récepteurs de positionnement par satellites GNSS1, GNSS2. La comparaison des composantes de l'estimation de cet écart avec des seuils associés (déterminés comme expliqué précédemment) revient à une analyse de la cohérence entre la première et la deuxième solution hybride élémentaire. Elle permet de détecter une panne non détectée d'un de ces récepteurs. Le calculateur CALC, 100, réalise le premier test de détection décrit précédemment à intervalles de temps réguliers. On compare par exemple un premier seuil SE$\Delta$H1 relatif à la composante horizontale de la position avec les composantes de l'estimation EVEE1 du vecteur d'état étendu VEE1 correspondant aux écarts relatifs aux composantes latérales et longitudinales de la position. En variante, ou en outre, on compare les composantes de l'estimation EVEE1 du premier vecteur d'état étendu VEE1 correspondant aux écarts relatifs aux composantes de toute autre mesure de position (par exemple l'altitude) à un seuil correspondant. Pendant la mission, on compare avantageusement à intervalles de temps réguliers le rayon de protection à la valeur limite L. Une alarme relative aux performances de l'aéronef est levée lorsque le rayon de protection dépasse cette limite car l'aéronef ne présente plus les performances nécessaires pour suivre la mission.

Lorsque le calculateur étendu CALC, 100, détecte une panne, il est nécessaire d'analyser la redondance dont on dispose pour savoir si on peut exclure le récepteur fautif ou s'il est nécessaire d'adopter une autre stratégie. Lorsque le système hybride selon l'invention comprend uniquement 2 récepteurs de positionnement par satellites, à savoir le récepteur primaire GNSS1 et le récepteur secondaire GNSS2 qui alimentent le premier filtre étendu KE1, on ne sait pas identifier celui qui présente une panne matérielle. On arrête alors l'alimentation du filtre Kalman d'hybridation K1 et du filtre de Kalman étendu KE1 au moyen des mesures brutes. On dit que les mesures brutes ne sont plus disponibles pour les filtres de Kalman. Cela revient à cesser d'hybrider les mesures inertielles et les premières mesures brutes et à cesser de recaler le Kalman étendu KE1 au moyen des mesures brutes. Les filtres de Kalman sont toujours recalés au moyen des mesures inertielles (pour le filtre d'hybridation) et de la première solution hybride élémentaire PPVI1 (pour le filtre de Kalman étendu), ils produisent toujours des estimées a posteriori des vecteurs d'état VE, VEE1. On dit que ces filtres propagent les erreurs inertielles.

Avantageusement, le rayon de protection RHG1 protégeant la première solution hybride élémentaire contre les éventuelles pannes des récepteurs de positionnement par satellites est calculé pour taux de non-intégrité PNI égal à un taux non-intégrité normal PNIN tant qu'aucune panne d'un récepteur GNSS n'est détectée. Lorsqu'une panne est détectée et que l'on passe en mode survie ("coasting" en anglais), le rayon de protection est calculé pour un taux de non-intégrité de survie PNIS égal au taux de non-intégrité normal PNIN ou un taux de non intégrité de valeur plus importante. Le taux de non-intégrité de survie est par exemple égal au taux de non-intégrité normal PNIN si l'on souhaite que l'aéronef continue sa trajectoire en garantissant les mêmes performances. Il est plus important que le taux de non-intégrité normal PNIN lorsque suite à une détection de panne, l'aéronef suit une nouvelle trajectoire sur laquelle il n'est pas contraint de garantir les mesures de position avec un taux de non-intégrité aussi faible qu'en phase d'approche (il quitte par exemple une trajectoire d'approche et remonte en altitude en suivant une trajectoire d'échappement.)

En survie, le seuil SE$\Delta$G1 à partir duquel est calculé le rayon de protection est toujours calculé à partir de la première matrice de variance/covariance étendue mais la valeur de cette matrice a évolué depuis la détection de la panne par propagation des erreurs inertielles. Le rayon de protection en mode survie prend ainsi en compte l'effet de la panne sur la solution hybride même lorsque l'on a cessé d'utiliser les mesures brutes. Il borne l'erreur de position en survie avec le degré de confiance souhaité. Ce rayon est parfaitement utilisable pour définir une trajectoire évasive ce qui ne serait pas le cas si on ne tenait compte que de la contribution du bruit. Cette précaution est nécessaire à cause du caractère récursif à longue constante de temps du filtre de Kalman d'hybridation (une mesure satellite disparue continue d'influencer la solution hybride et son rayon de protection pendant longtemps). Le rayon de protection du système hybride selon l'invention est en outre disponible à chaque instant même lorsqu'une panne est détectée.

En prédiction, il est possible d'évaluer la valeur du rayon de protection hybride de la solution hybride élémentaire en mode survie en faisant l'hypothèse d'une détection de panne à un instant donné et en calculant le rayon de protection pour un niveau de non-intégrité de survie PNIS.

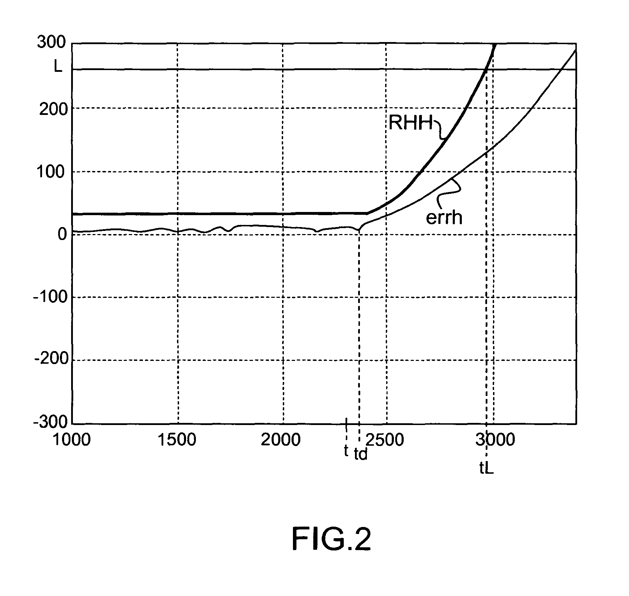

Sur la figure 2, on a illustré un exemple de comportement du premier rayon de protection du système hybride RHH (en gras) associé à une position horizontale (G=H) et de l'erreur errh sur la position horizontale en fonction du temps lorsqu'une panne d'un récepteur satellite est injectée à l'instant t égal à 2350 secondes. Avant la panne, le rayon de protection hybride est calculé pour un niveau d'intégrité normal de $10^{-7}$/h. L'erreur est détectée à l'instant de détection td égal à 2400 secondes. Le système hybride passe alors en mode survie, le niveau d'intégrité de survie est de $10^{-3}$/h. On constate que le premier rayon de protection augmente tout en majorant, comme souhaité, l'erreur position horizontale hybride élémentaire. En effet, les mesures satellites ne viennent plus recaler la solution hybride élémentaire ce qui dégrade la précision de la solution inertielle. On ne prend pas de risque en évaluant les performances de l'aéronef sur la base du rayon de protection hybride. De plus, le fait de disposer d'un calcul continu du rayon de protection peut permettre à un aéronef de ne pas avoir à s'échapper de la trajectoire qu'il suit dés que la panne est détectée (lorsque l'erreur sur la position est faible.) Le premier rayon de protection modélise l'effet de la panne sur l'erreur de position. L'aéronef peut attendre jusqu'à ce que le rayon de protection dépasse la limite L. Le premier rayon de protection calculé pour un niveau d'intégrité de survie reste égal au rayon de protection calculé pour un taux de non-intégrité normal PNIN égal à $10^{-7}$/h tant que le rayon de protection calculé pour un taux de non-intégrité de survie PNIS égal à 10-3 ne l'a pas rejoint. En d'autres termes, le rayon de protection est ici calculé à partir du taux de non-intégrité qui engendre le rayon de protection le plus important parmi PNIN et PNIS. Cela permet, lorsque le taux de non-intégrité de survie est supérieur au taux de non-intégrité normal d'éviter que le rayon de protection diminue après la détection de panne.

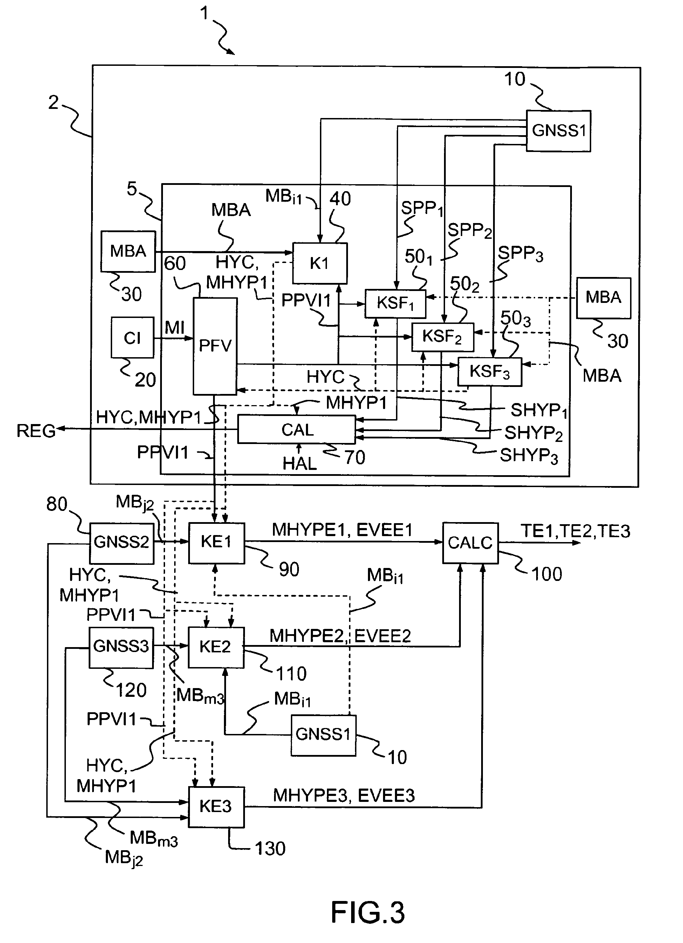

Dans un deuxième mode de réalisation, représenté sur la figure 3, le système hybride selon l'invention comprend un récepteur de positionnement par satellite tertiaire GNSS3, 120, produisant des mesures brutes tertiaires $MB_{m3}$, issues de R satellites visibles, avec m compris entre 1 et R (nombre entier). Avantageusement, un tel système hybride comprend un deuxième KE2, 110, et un troisième KE3, 130, filtres de Kalman étendus. Le deuxième filtre étendu KE2, 110, reçoit les mêmes données que le premier filtre étendu KE1 à l'exception des mesures brutes $MB_{j2}$ secondaires qui sont remplacées par les mesures brutes tertiaires $MB_{m3}$. Il présente un deuxième vecteur d'état VEE2 similaire à VEE1 à l'exception de la partie HI2 qui est remplacée par les erreurs affectant les paramètres d'horloge HI3 du récepteur tertiaire GNSS3 et à l'exception de la partie $\Delta X$ qui est représentative de l'écart entre la première solution hybride élémentaire PPVI1 et une troisième solution hybride élémentaire PPVI3 obtenue en hybridant au moyen de la première unité d'hybridation 5 les mesures inertielles MI et les mesures tertiaires $MB_{m3}$ issues de satellites communs aux récepteurs primaire et tertiaire. Il produit une deuxième estimation EVEE2 du deuxième vecteur d'état étendu VEE2, le deuxième vecteur d'état étendu est estimé par le filtre KE2 en utilisant successivement les mesures brutes primaires et tertiaires qui proviennent des mêmes satellites. Il produit également une deuxième matrice de variance/covariance étendue MHYPE2, représentant la statistique d'erreur de l'estimation du vecteur d'état étendu VEE2.

Le troisième filtre étendu KE3, 130, reçoit les mêmes données que le premier filtre étendu KE1 à l'exception des mesures brutes $MB_{i1}$ primaires qui sont remplacées par les mesures tertiaires $MB_{m3}$. Il présente un troisième vecteur d'état VEE3 similaire à VEE1 à l'exception de la partie HI1 qui est remplacée par les erreurs sur les paramètres d'horloge HI3 du récepteur tertiaire et à l'exception de la partie $\Delta X$ qui est représentative de l'écart entre la deuxième solution hybride élémentaire PPVI2 et la troisième solution hybride élémentaire PPVI3. Il produit une troisième estimation EVEE3 du troisième vecteur d'état étendu VEE3, le troisième vecteur d'état étendu est estimé par le filtre KE3 en utilisant successivement les mesures brutes secondaires et tertiaires qui proviennent des mêmes satellites. Il produit en outre une troisième matrice de variance/covariance étendue MHYPE3, représentant la statistique d'erreur de l'estimation du vecteur d'état étendu VEE3.

Dans ce mode de réalisation, le calculateur CALC, 100 calcule en outre un deuxième et un troisième rayon de protection du système hybride RHG2, RHG3 relatifs à une grandeur de position G, à partir de la deuxième MHYPE2 et respectivement de la troisième MHYPE3 matrices de variance/covariance étendues. Les calculs sont effectués de la même manière que pour le premier seuil SEΔG1 à partir d'un deuxième SEΔG2 et d'un troisième seuils SEΔG3. Le calculateur étendu CALC, 100, effectue également un deuxième et un troisième tests similaires au premier test, consistant à comparer les composantes de la deuxième EVEE2 et la troisième EVEE3 estimations relatives à l'écart obtenu pour la grandeur G avec respectivement le deuxième SEΔG2 et le troisième SEΔG3 seuils. Les résultats TE1, TE2, TE3 des premier, deuxième et troisième tests sont positifs lorsque les composantes de la première EVEE1, respectivement la deuxième EVEE2, respectivement la troisième EVEE3 relatives à l'écart obtenu pour la grandeur G sont respectivement supérieures aux premier SEΔG1, deuxième SEΔG2 et troisième SEΔG3 seuils. Lorsqu'au moins un des résultats TE1, TE2, TE3, respectivement des premier, deuxième et troisième tests est positif, l'alarme est levée, un récepteur défaillant est détecté. Le calculateur étendu CALC, 100, identifie en outre le récepteur défaillant, parmi les trois récepteurs, à partir des résultats de test et exclue éventuellement le récepteur défaillant.

Lorsque deux résultats sont positifs et un résultat est négatif, le récepteur défaillant est le récepteur qui n'est pas pris en compte pour effectuer le test dont le résultat est négatif. Par exemple, en cas de panne sur le récepteur secondaire GNSS2, seuls le premier et le troisième test sont positifs.

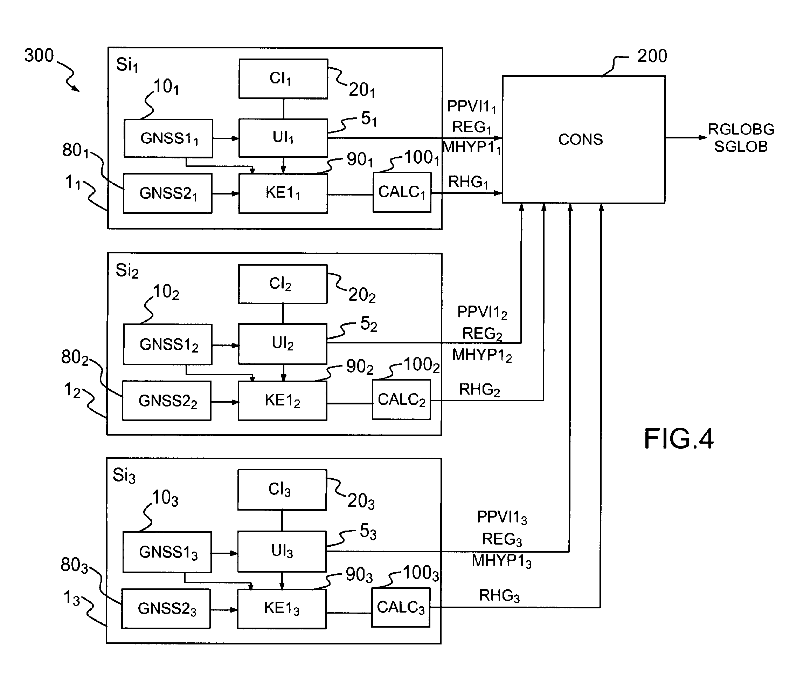

L'invention a également pour objet un dispositif 300 comprenant nombre M de systèmes hybrides $Si_k$, $1_k$ selon l'invention où k est un indice compris entre 1 et M, comme représenté sur la figure 4 où M est égal à 3. Le dispositif hybride comprend un ensemble de récepteurs de positionnement par satellites comprenant un premier récepteur GNSSA et un deuxième récepteur GNSSB. Les systèmes hybrides $Si_k$, $1_k$, comportent des centrales inertielles $CI_k$, $20_k$ différentes. Chaque système hybride $Si_k$ comporte un récepteur primaire $GNSS1_k$, $10_k$, et un récepteur secondaire $GNSS2_k$, $80_k$, pris indifféremment parmi le premier GNSSA et le deuxième récepteur GNSSB, le récepteur primaire d'un système hybride étant différent du récepteur secondaire du même système hybride (si le récepteur primaire est GNSSA, alors le récepteur secondaire est le deuxième récepteur GNSSB.) Pour plus de clarté, on n'a pas représenté les

données échangées entre les éléments composant chaque système hybride. Chaque système hybride comporte une unité d'hybridation $UI_k$, $5_k$, un calculateur $CALC_k$, $100_k$ et un filtre Kalman étendu $KE1_k$, $90_k$. Chaque système hybride $Si_k$ délivre, à un module de consolidation CONS, 200, une première solution hybride élémentaire $PPVI1_k$, un rayon de protection $REG_k$ protégeant une mesure hybride élémentaire de la position G vis à vis des pannes satellites, un premier rayon de protection $RHG1_k$ protégeant la grandeur de position G vis à vis des pannes matérielles d'un des récepteurs de positionnement par satellites du système hybride ainsi qu'une matrice de variance covariance primaire $MHYP1_k$ associée à l'erreur estimée sur la première solution hybride élémentaire $PPVI1_k$.

Le module de consolidation CONS, 200, détermine une solution hybride globale SGLOB et un rayon de protection global RGLOBG associé, pour une grandeur de position G, pour le dispositif selon l'invention. Le rayon de protection global protège la solution globale des éventuelles pannes des satellites, pannes matérielles des récepteurs de positionnement par satellites ainsi que des éventuelles pannes matérielles des centrales inertielles (ou plus généralement des ADIRU). Pour protéger la solution hybride globale contre des éventuelles pannes matérielles des différentes centrales inertielles, le module de consolidation CONS, 200, vérifie la cohérence entre une solution hybride globale SGLOB et les solutions hybrides individuelles $PPVI1_k$. Le raisonnement est basé sur le fait que la probabilité que deux centrales inertielles présentent simultanément des pannes matérielles non détectée par leurs tests intégrés respectifs est négligeable devant le niveau de non-intégrité recherché. En d'autres termes, il vérifie si l'écart entre les trois premières solutions hybrides élémentaires $PPVI1_k$, et la solution globale SGLOB est statistiquement probable. La solution hybride globale SGLOB est par exemple le barycentre de deux ou trois solutions hybrides individuelles prises parmi les premières solutions hybrides élémentaires $PPVI1_k$ des trois systèmes hybrides $Si_k$. En variante, la solution globale SGLOB est égale à une des premières solutions hybrides élémentaires $PPVI1_k$ d'un des trois systèmes hybrides $Si_k$. Pour faciliter la compréhension des paragraphes suivants nous nous placerons dans ce cas de figure sans perte de généralité. Le rôle de la consolidation effectuée par le module de consolidation CONS, 200, est de protéger la solution hybride globale contre les pannes matérielles relatives aux unités de mesure inertielles $CI_k$.

Afin de déterminer le rayon de protection global RGLOBG, le module de consolidation, 200, calcule un rayon de protection inertiel RUMIG relatif à une mesure de position G (qui est par exemple la position horizontale H.) Le rayon de protection inertiel RUMIG protège la solution hybride globale vis à vis d'une éventuelle panne d'une des centrales inertielles $CI_k$ (ou ADIRU comprenant ladite unité de mesure inertielle.)

Le rayon de protection inertiel RUMIG est calculé à partir de rayons de protection inertiels individuels $RUMIG_k$ calculés pour chaque centrale inertielle $CI_k$ dont la première solution hybride élémentaire $PPVI1_k$ est différente de la solution globale SGLOB. Autrement dit, le rayon de protection inertiel RUMIG est calculé à partir de rayons de protection inertiels individuels $RUMIG_k$ calculés pour les centrales inertielles qui sont différentes de la centrale inertielle dont est éventuellement issue la solution globale, lorsque la solution globale est égale à une solution élémentaire. Chaque rayon de protection inertiel individuel $RUMIG_k$ dépend de:

- la statistique $SG_k$ de l'écart entre la solution globale et la première solution élémentaire $PPVI1_k$, pour la grandeur G (par exemple la position horizontale),
- la matrice de variance/covariance de la solution élémentaire $MHYP1_k$,
- un deuxième taux de fausse alarme PFA2 acceptable représentant la probabilité maximale de fausses alarmes lors d'un test de détection de pannes matérielles affectant une des unités de mesure inertielles du dispositif selon l'invention et d'un deuxième taux de risque PND2 choisi de sorte à être inférieur ou égal au rapport entre le niveau de non-intégrité PNI et une probabilité déterminée PP2 d'apparition d'une panne d'une centrale inertielle.

On fixe un deuxième seuil $SE\Delta G2_k$ à partir duquel l'écart entre une solution élémentaire et la solution globale est jugé statistiquement improbable. Le deuxième seuil $SE\Delta G2_k$ est calculé de la même manière que le premier seuil $SE\Delta G1$ mais à partir du deuxième taux de fausse alarme PFA2 et de la statistique $SG_k$ de l'écart entre la solution globale et la première solution élémentaire PPVI1k, associée la grandeur G.

Avantageusement, la grandeur de position G est la position horizontale (qui concerne deux composantes latérale et longitudinale). En condition normale d'utilisation (en présence de GPS et après convergence du filtre d'hybridation), les trois systèmes hybrides sont fortement corrélés car les erreurs résiduelles des solutions hybrides élémentaires sont les erreurs à long terme des mesures brutes issues des récepteurs de positionnement par satellites. Comme les 2 récepteurs GNSSA et GNSSB de positionnement par satellites utilisent les mêmes satellites, les erreurs résiduelles sur les composantes des premières solutions hybrides individuelles sont globalement les mêmes pour chaque composante. En mode survie par contre, les erreurs tendent à se décorréler notamment lors de manoeuvres avion à cause de l'erreur de cap qui n'est pas commune aux trois systèmes hybrides élémentaires. Compte tenu de cette analyse, on peut prendre dans tous les cas une hypothèse conservatrice en disant que dans tous les cas les erreurs sont décorrélées. La statistique de l'écart peut donc être égale à la somme des erreurs des matrices de variance-covariance de chacune des premières solutions hybrides élémentaires. Le deuxième seuil est donc le même pour chaque système élémentaire.

Le rayon de protection inertiel individuel RUMIG$_k$ est la somme du deuxième seuil et d'un terme RBUMIG$_k$ relatif au bruit affectant ladite première solution hybride élémentaire PPVI1$_k$ en l'absence de panne d'une centrale inertielle. Le terme relatif au bruit RBUMIG$_k$ est calculé de la même manière que le rayon de protection associé au bruit mais à partir du taux de risque PND2 et de la matrice de variance/covariance de la solution élémentaire MHYP1$_k$. Le rayon de protection inertiel RUMIG est égal au rayon de protection inertiel individuel RUMIG$_k$ le plus faible. Le rayon de protection global RGLOBG associé à une grandeur de position G est égal au rayon de protection maximal parmi les rayons de protection REG$_k$ associé une grandeur de position G, les rayons de protection RHG$_k$ et le rayon de protection inertiel RUMIG.

**Revendications**

1.  Système hybride (1) INS/GNSS comportant un système hybride élémentaire (2) comportant :

    - un module primaire (10) de délivrance de mesures brutes élémentaires primaires MB$_{i1}$ comprenant chacune des mesures de positionnement et de bruit affectant lesdites mesures de positionnement,
    - un module élémentaire (20) de délivrance de mesures inertielles MI comprenant incréments d'angles et de vitesse
    - une unité d'hybridation (5) recevant les mesures inertielles MI et lorsqu'elles sont disponibles les mesures brutes primaires MB$_{i1}$, et produisant une première solution hybride élémentaire PPVI1 comportant des mesures de position et des paramètres d'erreurs du module élémentaire (20) ainsi qu'une matrice de variance/covariance primaire MHYP1,
    **caractérise en ce que** ledit système hybride comprenant en outre :
    - un module secondaire (80) de délivrance de mesures brutes élémentaires secondaires MB$_{j2}$,
    - un premier filtre de Kalman étendu KE1 (90) recevant la première solution hybride élémentaire PPVI1, la matrice de variance/covariance primaire MHYP1, les corrections hybrides HYC et, lorsqu'elles sont disponibles, les mesures brutes élémentaires primaires MB$_{i1}$ et secondaires MB$_{j2}$ issues de satellites communs au module primaire et au module secondaire, ledit filtre étendu KE1 ayant un premier vecteur d'état étendu VEE1 comprenant une partie dite d'écart hybride ΔX, représentant l'écart entre la première solution hybride élémentaire PPVI1 et une deuxième solution hybride élémentaire PPVI2 associée aux mesures inertielles MI et, lorsqu'elles sont disponibles, aux mesures brutes élémentaires secondaires MB$_{j2}$, ledit premier vecteur d'état étendu VEE1 comprenant en outre une partie erreur du système hybride élémentaire X1 affectant la première solution hybride élémentaire PPVI1, ledit filtre de Kalman étendu délivrant une première matrice de variance/covariance étendue MHYPE1 de l'erreur d'une première estimation EVEE1 du premier vecteur d'état VEE1,
    - un module de calcul étendu CALC (100) recevant la première matrice de variance/covariance étendue MHYPE1, ledit module de calcul étendu CALC (100) déterminant un premier rayon de protection du système hybride RHG1, associé à une grandeur de position G, à partir de la première matrice de variance/covariance étendue MHYPE1 en fonction d'une première probabilité de fausse alarme prédéterminée PFA1, d'un niveau de non-intégrité PNI prédéterminé et d'une première probabilité prédéterminée PP1 d'apparition d'une panne matérielle non détectée d'un récepteur de positionnement par satellites.

2.  Système hybride (1) selon la revendication précédente, **caractérisé en ce que** le premier rayon de protection du système hybride RHG1 associé à une grandeur de position G est calculé à partir d'un premier seuil de détection SEΔG1 associé à l'écart hybride ΔX relatif à la grandeur G, ledit premier seuil étant obtenu à partir d'une partie de la première matrice de variance/covariance étendue MHYPE1 associée à l'écart hybride ΔX relatif à ladite grandeur de position G, pour la première probabilité de fausse alarme prédéterminée PFA1, ledit premier rayon de protection du système hybride RHG1 dépendant en outre d'une partie de la première matrice de variance/covariance étendue MHYPE associée à la partie erreur du système hybride élémentaire X1 relative à la grandeur de position G pour un premier taux de risque PND1 choisi de sorte à être inférieur ou égal au rapport entre le niveau de non-intégrité PNI et la probabilité PP1 d'apparition d'une panne matérielle non détectée d'un récepteur de positionnement par satellites.

3.  Système hybride (1) selon l'une quelconque des revendications précédentes, **caractérisé en ce que** :

    - le module primaire (10), respectivement le module secondaire (80) est une unité de modélisation de mesures brutes primaires, respectivement mesures brutes secondaires, délivrées par un récepteur de positionnement par satellites primaire, respectivement secondaire, opérant à partir de constellations de satellites visibles poursuivis,

- le module élémentaire (20) de délivrance de mesures inertielles MI est une unité de modélisation de mesures inertielles délivrées par une centrale inertielle.

**4.** Système hybride étendu selon l'une quelconque des revendications 1 à 2, **caractérisé en ce que** :

- le module primaire (10), respectivement le module secondaire (80) est un récepteur de positionnement par satellites primaire GNSS1, respectivement secondaire GNSS2, opérant à partir de constellations de satellites visibles poursuivis,
- le module élémentaire (20) de délivrance de mesures inertielles MI est une centrale inertielle CI.

**5.** Système hybride (1) selon la revendication 4, **caractérisé en ce que** le premier filtre de Kalman étendu KE1 reçoit en outre une correction hybride HYC et produit une première estimation EVEE1 du premier vecteur d'état étendu VEE1, ledit module de calcul étendu CALC (100) effectuant un premier test de détection d'une panne matérielle, affectant un des récepteurs de positionnements par satellites pris parmi le récepteur primaire et le récepteur secondaire, en comparant les composantes de la première estimation EVEE1, relatives à l'écart hybride $\Delta X$ obtenu pour une grandeur de position G, avec ledit premier seuil de détection SE$\Delta$G1 associé à l'écart hybride $\Delta X$ relatif à la grandeur G, **en ce que** lorsqu'au moins une des composantes de la première estimation EVEE1, du premier vecteur d'état étendu VEE1 relatives à l'écart $\Delta X$ obtenu pour une grandeur de position G, est supérieure au premier seuil de détection SM$\Delta$G1, le module de calcul étendu CALC (100) déclenche une alarme sur la présence défaillance d'au moins un récepteur de positionnement par satellite.

**6.** Système hybride (1) selon la revendication précédente, **caractérisé en ce que** lorsqu'aucune des composantes de la première estimation EVEE1 du premier vecteur d'état étendu VEE1 relatives à l'écart $\Delta X$ obtenu pour la grandeur de position G n'est supérieure au premier seuil de détection SE$\Delta$G1, le niveau de non-intégrité PNI est égal à un niveau de non-intégrité normal PNIN.

**7.** Système hybride (1) selon la revendication 5, **caractérisé en ce** lorsqu'une alarme est déclenchée, l'alimentation de l'unité d'hybridation (5) et du filtre de Kalman étendu KE1 (90) au moyen des mesures brutes primaires et secondaires est arrêtée et en ce que ledit niveau de non-intégrité PNI est égal à un niveau de non-intégrité de survie PNIS supérieur ou égal au niveau de non-intégrité normal PNIN.

**8.** Système hybride (1) selon la revendication 4, **caractérisé en ce qu'**il comprend en outre :

- un récepteur de positionnement par satellite tertiaire GNSS3 (120) produisant des mesures brutes tertiaires MB$_{m3}$,
- un deuxième KE2 (110) filtre de Kalman étendu recevant les mêmes données que le premier filtre étendu KE1 à l'exception des mesures brutes MB$_{j2}$ secondaires qui sont remplacées par les mesures brutes tertiaires MB$_{m3}$, et produisant une deuxième estimation EVEE2 d'un deuxième vecteur d'état étendu VEE2, et une deuxième matrice de variance/covariance étendue MHYPE2 associée,
- un troisième KE3 (130) filtre étendu recevant les mêmes données que le premier filtre étendu KE1 à l'exception des mesures brutes MB$_{i1}$ primaires qui sont remplacées par les mesures tertiaires MB$_{m3}$ et produisant une troisième estimation EVEE3 d'un troisième vecteur d'état étendu VEE3, et une troisième matrice de variance/covariance étendue MHYPE3, associée, ledit calculateur étendu CALC (100) calculant en outre un deuxième et un troisième rayon de protection du système hybride RHG2, RHG3 relatifs à une grandeur de position G, à partir de la deuxième MHYPE2 et respectivement la troisième MHYPE3 matrices de variance/covariance étendues et effectue également un deuxième et un troisième tests consistant à comparer les composantes de la deuxième EVEE2 et la troisième EVEE3 estimation, relatives à l'écart obtenu pour la grandeur G, avec respectivement le deuxième SE$\Delta$G2 et le troisième SE$\Delta$G3 seuils, les résultats TE1, TE2, TE3 des premier, deuxième et troisième tests étant positifs lorsque lesdites composantes de la première EVEE1, respectivement la deuxième EVEE2, respectivement la troisième EVEE3 sont respectivement supérieures aux premier SE$\Delta$G1, deuxième SE$\Delta$G2 et troisième SE$\Delta$G3 seuils, et **en ce que** lorsqu'au moins un des résultats TE1, TE2, TE3, respectifs des premier, deuxième et troisième tests est positif, une alarme est levée, ledit calculateur étendu CALC (100) identifiant en outre le récepteur défaillant, parmi les trois récepteurs, à partir des résultats TE1, TE2, TE3 et excluant éventuellement le récepteur défaillant.

**9.** Système hybride (1) selon l'une quelconque des revendications 4 à 8, **caractérisé en ce que** la centrale inertielle est une centrale inertielle et aérodynamique de référence

**10.** Système hybride (1) selon l'une quelconque des revendications 4 à 9, **caractérisé en ce que** le(s) récepteur(s) de positionnement par satellite(s) est (ou sont) compris dans un (ou des) récepteur(s) de radiofréquence multi-canaux MMR.

11. Dispositif (300) comprenant un nombre M supérieur à 1, de système hybrides $Si_k(1_k)$ selon l'une quelconque des revendications précédentes, fournissant chacun un rayon de protection élémentaire $REG_k$ associé une grandeur de position G, un rayon de protection hybride $RHG_k$ associés à ladite grandeur de position G ainsi qu'une matrice de variance/covariance de la solution élémentaire $MHYP1_k$ associée à l'erreur faite sur une première solution hybride élémentaire $PPVI1_k$, ledit dispositif (300) comprenant en outre un module de consolidation CONS (200) déterminant une solution hybride globale SGLOB, ledit module de consolidation CONS (200) déterminant un rayon de protection inertiel RUMIG, qui est la valeur la plus faible prise parmi des rayons de protection inertiels individuels $RUMIG_k$ calculés pour chaque centrale inertielle $CI_k$ dont la première solution hybride élémentaire PPVI1 est différente de la solution globale SGLOB, chaque rayon de protection inertiel individuel $RUMIG_k$ dépendant de :

- la statistique $SG_k$ de l'écart entre la solution globale et la première solution élémentaire $PPVI1_k$, pour la grandeur,
- la première matrice de variance/covariance de la solution élémentaire $MHYP1_k$,
- un deuxième taux de fausse alarme PFA2 acceptable et d'un deuxième taux de risque PND2 choisi de sorte à être inférieur ou égal au rapport entre le niveau de non-intégrité PNI et une probabilité déterminée PP2 d'apparition d'une panne d'une centrale inertielle.

12. Dispositif (300) selon la revendication précédente, **caractérisé en ce que** la statistique $SG_k$ de l'écart entre la solution globale et la première solution élémentaire $PPVI1_k$, pour la grandeur G est égale à la somme des erreurs des matrices de variance-covariance de chacune des premières solutions hybrides élémentaires.

13. Dispositif (300) selon l'une quelconque des revendications 11 à 12, **caractérisé en ce que** le module de consolidation CONS (200) détermine en outre un rayon de protection global RGLOBG associé à une des grandeurs de position G composant la solution hybride globale SGLOB, ledit rayon de protection RGLOBG étant la valeur la plus élevée prise parmi :

- les rayons de protection élémentaires $REG_k$,
- les rayons de protection hybrides $RHG_k$,
- le rayon de protection inertiel RUMIG.

**Claims**

1. An INS/GNSS hybrid system (1) including an elementary hybrid system (2) comprising:

- a primary module (10) for delivering primary elementary raw measurements $MB_{i1}$ each comprising position measurements and noise that affects said position measurements,
- an elementary module (20) for delivering inertial measurements MI comprising increments of angles and of speed,
- a hybridisation unit (5) receiving the inertial measurements MI and the primary raw measurements $MB_{i1}$ when they are available, and producing a first elementary hybrid solution PPVI1 that comprises position measurements and error parameters of the elementary module (20) as well as a primary variance/covariance matrix MHYP1,

**characterised in that** said hybrid system further comprises:

- a secondary module (80) for delivering secondary elementary raw measurements $MB_{j2}$,
- a first extended Kalman filter KE1 (90) receiving the first elementary hybrid solution PPVI1, the primary variance/covariance matrix MHYP1, the hybrid corrections HYC and, when they are available, the primary $MB_{i1}$ and secondary $MB_{j2}$ elementary raw measurements coming from satellites that are common to the primary module and to the secondary module, said extended filter KE1 having a first extended state vector VEE1 that comprises a part, referred to as hybrid difference $\Delta X$, that represents the difference between the first elementary hybrid solution PPVI1 and a second elementary hybrid solution PPVI2 that is associated with the inertial measurements MI and, when they are available, with the secondary elementary raw measurements $MB_{j2}$, said first extended state sector VEE1 further comprising an error part in the elementary hybrid system X1 that affects the first elementary hybrid solution PPVI1, said extended Kalman filter delivering a first extended variance/covariance matrix MHYPE1 of the error of a first estimate EVEE1 of the first state vector VEE1,
- an extended calculation module CALC (100) receiving the first extended variance/covariance matrix MHYPE1, said extended calculation module CALC (100) determining a first protection radius of the hybrid system RHG1, associated with a first position value G, on the basis of the first extended variance/covariance matrix MHYPE1 as a function of a first predetermined false alarm probability PFA1, a predetermined level of non-integrity PNI and a first predetermined probability PP1 of the occurrence of a non-detected equipment failure in a satellite positioning receiver.

2. The hybrid system (1) according to the preceding claim, **characterised in that** the first protection radius of the hybrid system RHG1 that is associated with a position value G is calculated on the basis of a first detection threshold SE$\Delta$G1 that is associated with the hybrid difference $\Delta$X relative to the value G, said first threshold being obtained on the basis of part of the first extended variance/covariance matrix MHYPE1 that is associated with the hybrid difference $\Delta$X relative to said position value G, for the first predetermined false alarm probability PFA1, said first protection radius of the hybrid system RHG1 further depending on part of the first extended variance/covariance matrix MHYPE that is associated with the error part of the elementary hybrid system X1 relative to the position value G for a first risk rate PND1 that is selected so as to be less than or equal to the ratio between the level of non-integrity PNI and the probability PP1 of the occurrence of a non-detected equipment failure in a satellite positioning receiver.

3. The hybrid system (1) according to any one of the preceding claims, **characterised in that**:

    - the primary module (10) and the secondary module (80) are units for modelling primary and secondary raw measurements, respectively, that are delivered by primary and secondary satellite positioning receivers, respectively, that operate on the basis of tracked visible satellite constellations,
    - the elementary module (20) for delivering inertial measurements MI is a unit for modelling inertial measurements delivered by an inertial unit.

4. The extended hybrid system according to any one of claims 1 to 2, **characterised in that**:

    - the primary module (10) and the secondary module (80) are primary GNSS1 and secondary GNSS2 satellite positioning receivers, respectively, that operate on the basis of tracked visible satellite constellations,
    - the elementary module (20) for delivering inertial measurements MI is an inertial unit CI.

5. The hybrid system (1) according to claim 4, **characterised in that** the first extended Kalman filter KE1 further receives a hybrid correction HYC and produces a first estimate EVEE1 of the first extended state vector VEE1, said extended calculation module CALC (100) performing a first test for detecting an equipment failure that affects one of the satellite positioning receivers from among the primary receiver and the secondary receiver by comparing the components of the first estimate EVEE1 relative to the hybrid difference $\Delta$X that is obtained for a position value G with said first detection threshold SE$\Delta$G1 that is associated with the hybrid difference $\Delta$X relative to the value G, **in that** when at least one of the components of the first estimate EVEE1 of the first extended state vector VEE1 relative to the difference $\Delta$X obtained for a position value G is greater than the first detection threshold SE$\Delta$G1, the extended calculation module CALC (100) triggers an alarm for the presence of a fault in at least one satellite positioning receiver.

6. The hybrid system (1) according to the preceding claim, **characterised in that** when none of the components of the first estimate EVEE1 of the first extended state vector VEE1 relative to the difference $\Delta$X obtained for the position value G is greater than the first detection threshold SE$\Delta$G1, the level of non-integrity PNI is equal to a normal level of non-integrity PNIN.

7. The hybrid system (1) according to claim 5, **characterised in that** when an alarm is triggered, the supply of the hybridisation unit (5) and of the extended Kalman filter KE1 (90) with the primary and secondary raw measurements is stopped, and **in that** said level of non-integrity PNI is equal to a coasting level of non-integrity PNIS that is greater than or equal to the normal level of non-integrity PNIN.

8. The hybrid system (1) according to claim 4, **characterised in that** it further comprises:

    - a tertiary GNSS3 satellite positioning receiver (120) producing tertiary raw measurements MB$_{m3}$,
    - a second extended Kalman filter KE2 (110) receiving the same data as the first extended filter KE1 with the exception of the secondary raw measurements MB$_{j2}$ that are replaced by the tertiary raw measurements MB$_{m3}$, and producing a second estimate EVEE2 of a second extended state vector VEE2 and a second associated extended variance/covariance matrix MHYPE2,
    - a third extended filter KE3 (130) receiving the same data as the first extended filter KE1 with the exception of the primary raw measurements MB$_{i1}$ that are replaced by the tertiary raw measurements MB$_{m3}$, and producing a third estimate EVEE3 of a third extended state vector VEE3 and a third associated extended variance/covariance matrix MHYPE3,
    said extended calculator CALC (100) further calculating a second and a third protection radius of the hybrid system RHG2, RHG3 relative to a position value G on the basis of the second MHYPE2 and the third MHYPE3 extended variance/covariance matrices, respectively, and also performing a second and a third test that consists in comparing the components of the second EVEE2 and the third EVEE3 estimate relative to the difference obtained for the value G with the second SE$\Delta$G2 and the third SE$\Delta$G3 thresholds, respectively, the results TE1, TE2, TE3 of said first, second and third tests being positive when said components of the first EVEE1, second EVEE2 and third EVEE3 estimates, respectively, are greater than the first SE$\Delta$G1, second SE$\Delta$G2 and third SE$\Delta$G3 thresholds, respectively, and **in that** when at least one of the respective results TE1, TE2, TE3 of the first, second and third tests is positive, an alarm is raised, said extended calculator CALC (100) further identifying the faulty receiver out of the three receivers based on the results TE1, TE2, TE3 and possibly excluding the faulty receiver.

9. The hybrid system (1) according to any one of claims 4 to 8, **characterised in that** the inertial unit is an air data inertial reference unit.

10. The hybrid system (1) according to any one of claims 4 to 9, **characterised in that** the satellite positioning receiver(s) is (or are) included in one (or more) multi-channel radio-frequency receivers MMR.

11. A device (300) comprising a number M, that is greater than 1, of hybrid systems $Si_k(1_k)$ according to any one of the preceding claims, each providing an elementary protection radius $REG_k$ associated with a position value G, a hybrid protection radius $RHG_k$ associated with said position value G, as well as a variance/covariance matrix of the elementary solution $MHYP1_k$ associated with the error made on a first elementary hybrid solution $PPVI1_k$, said device (300) further comprising a consolidation module CONS (200) that determines a global hybrid solution SGLOB, said consolidation module CONS (200) determining an inertial protection radius RUMIG, which is the lowest value taken from the individual inertial protection radii $RUMIG_k$ calculated for each inertial unit $CI_k$, the first elementary hybrid solution $PPVI1_k$ of which is different from the global solution SGLOB, each individual inertial protection radius $RUMIG_k$ being dependent on:

   - the statistic $SG_k$ of the difference between the global solution and the first elementary solution $PPVI1_k$, for the value,
   - the first variance/covariance matrix of the elementary solution $MHYP1_k$,
   - a second acceptable false alarm rate PFA2 and a second risk rate PND2 selected so as to be less than or equal to the ratio between the level of non-integrity PNI and a determined probability PP2 of the occurrence of a failure of an inertial unit.

12. The device (300) according to the preceding claim, **characterised in that** the statistic $SG_k$ of the difference between the global solution and the first elementary solution $PPVI1_k$ for the value G is equal to the sum of the errors of the variance/covariance matrices of each of the first elementary hybrid solutions.

13. The device (300) according to any one of claims 11 to 12, **characterised in that** the consolidation module CONS (200) further determines a global protection radius RGLOBG that is associated with one of the position values G that comprises the global hybrid solution SGLOB, said protection radius RGLOBG being the highest value taken from:

   - the elementary protection radii $REG_k$,
   - the hybrid detection radii $RHG_k$,
   - the inertial protection radius RUMIG.

**Patentansprüche**

1. INS/GNSS-Hybridsystem (1) mit einem elementaren Hybridsystem (2), das Folgendes umfasst:

   - ein Primärmodul (10) zum Liefern von primären elementaren Rohmesswerten $MB_{i1}$, die jeweils Positionsmesswerte und Rauschen beinhalten, das die Positionsmesswerte beeinträchtigt,
   - ein Elementarmodul (20) zum Liefern von Trägheitsmesswerten MI, die Winkel- und Geschwindigkeitsinkremente beinhalten,
   - eine Hybridisierungseinheit (5), die die Trägheitsmesswerte MI und die primären Rohmesswerte $MB_{i1}$, wenn diese verfügbar sind, empfängt, und eine erste elementare Hybridlösung PPVI1 erzeugt, die Positionsmesswerte und Fehlerparameter des Elementarmoduls (20) sowie eine primäre Varianz/Kovarianz-Matrix MHYP1 beinhaltet,
   **dadurch gekennzeichnet, dass** das Hybridsystem ferner Folgendes umfasst:
   - ein Sekundärmodul (80) zum Liefern von sekundären elementaren Rohmesswerten $MB_{j2}$,
   - ein erstes erweitertes Kalman-Filter KE1 (90), das die erste elementare Hybridlösung PPVI1, die primäre Varianz/Kovarianz-Matrix MHYP1, die Hybridkorrekturen HYC und, wenn verfügbar, die primären $MB_{i1}$ und sekundären $MB_{j2}$ elementaren Rohmesswerte, die von dem Primärmodul und dem Sekundärmodul gemeinsamen Satelliten kommen, empfängt, wobei das erweiterte Filter KE1 einen ersten erweiterten Zustandsvektor VEE1 hat, der einen Teil umfasst, Hybriddifferenz $\Delta$X genannt, der die Differenz zwischen der ersten elementaren Hybridlösung PPVI1 und einer zweiten elementaren Hybridlösung PPVI2 repräsentiert, die mit den Trägheitsmesswerten MI und, wenn verfügbar, mit den sekundären elementaren Rohmesswerten MB$_{j2}$ assoziiert ist, wobei der erste erweiterte Zustandsvektor VEE1 ferner einen Fehlerteil des elementaren Hybridsystems X1 beinhaltet, der die erste elementare Hybridlösung PPVI1 beeinträchtigt, wobei das erweiterte Kalman-Filter eine erste erweiterte Varianz/Kovarianz-Matrix MHYPE1 des Fehlers einer ersten Schätzung EVEE1 des ersten Zustandsvektors VEE1 liefert,
- ein erweitertes Rechenmodul CALC (100), das die erste erweiterte Varianz/Kovarianz-Matrix MHYPE1 empfängt, wobei das erweiterte Rechenmodul CALC (100) einen ersten Schutzradius des Hybridsystems RHG1, der mit einem ersten Positionswert G assoziiert ist, auf der Basis der ersten erweiterten Varianz/Kovarianz-Matrix MHYPE1 in Abhängigkeit von einer ersten vorbestimmten Fehlalarmwahrscheinlichkeit PFA1, einem vorbestimmten Niveau an Nicht-Integrität PNI und einer ersten vorbestimmten Wahrscheinlichkeit PP1 des Auftretens eines nicht erkannten Hardware-Defekts in einem Satellitenpositionierungsempfänger bestimmt.

2. Hybridsystem (1) nach dem vorherigen Anspruch, **dadurch gekennzeichnet, dass** der erste Schutzradius des Hybridsystems RHG1, der mit einem Positionswert G assoziiert ist, auf der Basis eines ersten Erkennungsschwellenwertes SE$\Delta$G1 berechnet wird, der mit der Hybriddifferenz $\Delta$X relativ zum Wert G assoziiert ist, wobei der erste Schwellenwert auf der Basis eines Teils der ersten erweiterten Varianz/Kovarianz-Matrix MHYPE1, die mit der Hybriddifferenz $\Delta$X relativ zum Positionswert G assoziiert ist, für die erste vorbestimmte Fehlalarmwahrscheinlichkeit PFA1 erhalten wird, wobei der erste Schutzradius des Hybridsystems RHG1 ferner von einem Teil der ersten erweiterten Varianz/Kovarianz-Matrix MHYPE abhängig ist, die mit dem Fehlerteil des elementaren Hybridsystems X1 relativ zum Positionswert G für eine erste Risikorate PND1 assoziiert ist, die so gewählt wird, dass sie gleich oder kleiner als das Verhältnis zwischen dem Niveau an Nicht-Integrität PNI und der Wahrscheinlichkeit PP1 des Auftretens eines nicht erkannten Hardware-Defekts in einem Satellitenpositionsempfänger ist.

3. Hybridsystem (1) nach einem der vorherigen Ansprüche, **dadurch gekennzeichnet, dass**:

- das Primärmodul (10) und das Sekundärmodul (80) jeweils Einheiten zum Modellieren von primären bzw. sekundären Rohmesswerten sind, die von einem primären bzw. sekundären Satellitenpositionierungsempfänger geliefert werden, der auf der Basis von verfolgten sichtbaren Satellitenkonstellationen arbeiten,
- das Elementarmodul (20) zum Liefern von Trägheitsmesswerten MI eine Einheit zum Modellieren von Trägheitsmesswerten ist, die von einer Trägheitseinheit geliefert werden.

4. Erweitertes Hybridsystem nach einem der Ansprüche 1 bis 2, **dadurch gekennzeichnet, dass**:

- das Primärmodul (10) und das Sekundärmodul (80) jeweils ein primärer GNSS1 bzw. sekundärer GNSS2 Satellitenpositionierungsempfänger sind, die auf der Basis von verfolgten sichtbaren Satellitenkonstellationen arbeiten,
- das Elementarmodul (20) zum Liefern von Trägheitsmesswerten MI eine Trägheitseinheit CI ist.

5. Hybridsystem (1) nach Anspruch 4, **dadurch gekennzeichnet, dass** das erste erweiterte Kalman-Filter KE1 ferner eine Hybridkorrektur HYC empfängt und eine erste Schätzung EVEE1 des ersten erweiterten Zustandsvektors VEE1 erzeugt, wobei das erweiterte Rechenmodul CALC (100) einen ersten Test zum Erkennen eines Hardware-Defekts, der einen aus primärem und sekundärem Satellitenpositionierungsempfänger beeinträchtigt, durch Vergleichen der Komponenten der ersten Schätzung EVEE1 relativ zur Hybriddifferenz $\Delta$X, die für einen Positionswert G erhalten wird, mit dem ersten Erkennungsschwellenwert SE$\Delta$G1 durchführt, der mit der Hybriddifferenz $\Delta$X relativ zum Wert G assoziiert ist, **dadurch**, dass das erweiterte Rechenmodul CALC (100), wenn wenigstens eine der Komponenten der ersten Schätzung EVEE1 des ersten erweiterten Zustandsvektors VEE1 relativ zu der für einen Positionswert G erhaltenen Differenz $\Delta$X größer ist als der erste Erkennungsschwellenwert SE$\Delta$G1, einen Alarm für das Vorliegen eines Defekts in wenigstens einem Satellitenpositionierungsempfänger auslöst.

6. Hybridsystem (1) nach dem vorherigen Anspruch, **dadurch gekennzeichnet, dass**, wenn keine der Komponenten der ersten Schätzung EVEE1 des ersten erweiterten Zustandsvektors VEE1 relativ zu der für den Positionswert G erhaltenen Differenz $\Delta$X größer ist als der erste Erkennungsschwellenwert SE$\Delta$G1, das Niveau an Nicht-Integrität PNI gleich einem Normalniveau an Nicht-Integrität PNIN ist.

7. Hybridsystem (1) nach Anspruch 5, **dadurch ge-**

**kennzeichnet, dass**, wenn ein Alarm ausgelöst wird, die Versorgung der Hybridisierungseinheit (5) und des erweiterten Kalman-Filters KE1 (90) mit primären und sekundären Rohmesswerten gestoppt wird, und **dadurch**, dass das Niveau an Nicht-Integrität PNI gleich einem Leerlauf-(Coasting)-Niveau an Nicht-Integrität PNIS ist, das gleich oder größer als das normale Niveau an Nicht-Integrität PNIN ist.

8. Hybridsystem (1) nach Anspruch 4, **dadurch gekennzeichnet, dass** es ferner Folgendes umfasst:

- einen tertiären GNSS3-Satellitenpositionie-rungsempfänger (120), der tertiäre Rohmess-werte $MB_{m3}$ erzeugt,
- ein zweites erweitertes Kalman-Filter KE2 (110), das dieselben Daten empfängt wie das erste erweiterte Filter KE1, mit Ausnahme der sekundären Rohmesswerte $MB_{j2}$, die durch die tertiären Rohmesswerte $MB_{m3}$ ersetzt werden, und eine zweite Schätzung EVEE2 eines zweiten erweiterten Zustandsvektors VEE2 und einer zweiten assoziierten erweiterten Varianz/Kovarianz-Matrix MHYPE2 erzeugt,
- wobei ein drittes erweitertes Filter KE3 (130) dieselben Daten empfängt wie das erste erweiterte Filter KE1, mit Ausnahme der primären Rohmesswerte $MB_{i1}$, die durch die tertiären Rohmesswerte $MB_{m3}$ ersetzt werden, und eine dritte Schätzung EVEE3 eines dritten erweiterten Zustandsvektors VEE3 und einer dritten as-soziierten erweiterten Varianz/Kovarianz-Ma-trix MHYPE3 erzeugt,

wobei der erweiterte Rechner CALC (100) ferner einen zweiten und einen dritten Schutzradius des Hybridsystems RHG2, RHG3 relativ zu einem Positionswert G auf der Basis der zweiten MHYPE2 bzw. dritten MHYPE3 erweiterten Varianz/Kovarianz-Matrix berechnet und auch einen zweiten und einen dritten Test durchführt, der im Vergleichen der Komponenten der zweiten EVEE2 und der dritten EVEE3 Schätzung relativ zu der für den Wert G erhaltenen Differenz jeweils mit dem zweiten SE∆G2 und dem dritten SE∆G3 Schwellenwert besteht, wobei die Ergebnisse TE1, TE2, TE3 des ersten, zweiten und dritten Tests positiv sind, wenn die Komponenten der ersten EVEE1, zweiten EVEE2 bzw. dritten EVEE3 Schätzung jeweils größer sind als der erste SEÄG1, zweite SEÄG2 bzw. dritte SEÄG3 Schwellenwert, und **dadurch**, dass, wenn wenigstens eines der jeweiligen Ergebnisse TE1, TE2, TE3 des ersten, zweiten und dritten Tests positiv ist, ein Alarm ausgelöst wird, wobei der erweiterte Rechner CALC (100) ferner den defekten Empfänger aus den drei Empfängern auf der Basis der Ergebnisse TE1, TE2, TE3 identifiziert und den defekten Empfänger eventuell ausschließt.

9. Hybridsystem (1) nach einem der Ansprüche 4 bis 8, **dadurch gekennzeichnet, dass** die Trägheitseinheit eine Trägheits- und Aerodynamik-Referenzeinheit ist.

10. Hybridsystem (1) nach einem der Ansprüche 4 bis 9, **dadurch gekennzeichnet, dass** der/die Satelli-tenpositionierungsempfänger in einem (oder meh-reren) Mehrkanal-Funkfrequenzempfänger(n) MMR enthalten ist/sind.

11. Vorrichtung (300), die eine Anzahl M, größer als 1, von Hybridsystemen $Si_k(1_k)$ nach einem der vorhe-rigen Ansprüche umfasst, die jeweils einen mit einem Positionswert G assoziierten elementaren Schutzradius $REG_k$, einen mit dem Positionswert G assoziierten Hybridschutzradius $RHG_k$ sowie eine Varianz/Kovarianz-Matrix der Elementarlösung $MHYP1_k$ bereitstellen, die mit dem Fehler in einer ersten elementaren Hybridlösung $PPVI1_k$ assoziiert ist, wobei die Vorrichtung (300) ferner ein Konsolidierungsmodul CONS (200) umfasst, das eine globale Hybridlösung SGLOB ermittelt, wobei das Kon-solidierungsmodul CONS (200) einen Trägheits-schutzradius RUMIG ermittelt, der der kleinste Wert aus den einzelnen Trägheitsschutzradien $RUMIG_k$ ist, die für jede Trägheitseinheit $CI_k$ berechnet wur-den, deren erste elementare Hybridlösung $PPVI1_k$ sich von der globalen Lösung SGLOB unterscheidet, wobei jeder individuelle Trägheitsschutzradius $RUMIG_k$ abhängig ist von:

- der Statistik $SG_k$ der Differenz zwischen der globalen Lösung und der ersten Elementarlö-sung $PPVI1_k$ für den Wert,
- der ersten Varianz/Kovarianz-Matrix der Ele-mentarlösung $MHYP1_k$,
- einer zweiten akzeptablen Fehlalarmrate PFA2 und einer zweiten Risikorate PND2, so gewählt, dass sie gleich oder kleiner als das Verhältnis zwischen dem Niveau an Nicht-Integrität PNI und einer ermittelten Wahrscheinlichkeit PP2 des Auftretens eines Defekts in einer Trägheitseinheit ist.

12. Vorrichtung (300) nach dem vorherigen Anspruch, **dadurch gekennzeichnet, dass** die Statistik $SG_k$ der Differenz zwischen der globalen Lösung und der ersten Elementarlösung $PPVI1_k$ für den Wert G gleich der Summe der Fehler der Varianz/Kovarianz-Matrizen jeder der ersten elementaren Hybridlösungen ist.

13. Vorrichtung (300) nach einem der Ansprüche 11 bis 12, **dadurch gekennzeichnet, dass** das Konsolidierungsmodul CONS (200) ferner einen globalen Schutzradius RGLOBG ermittelt, der mit einem der Positionswerte G assoziiert ist, der die globale Hybridlösung SGLOB umfasst, wobei der Schutzradius RGLOBG der höchste Wert ist aus:

- den elementaren Schutzradien $REG_k$,
- den Hybridschutzradien $RHG_k$,
- dem Trägheitsschutzradius RUMIG.

FIG.1

EP 2 299 287 B1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008040658 A